# EUROPÄISCHE PATENTSCHRIFT

(11) **EP 3 271 138 B1**
(45) Veröffentlichungstag und Bekanntmachung des Hinweises auf die Patenterteilung: **09.12.2020**
(21) Anmeldenummer: 16720983.2
(22) Anmeldetag: 17.03.2016
(51) Int. Cl.: B29C 65/36, B29C 45/16, B29C 65/78, B29C 65/20, B29C 65/72, F16L 47/02, F16L 39/00, B29C 65/82, B29L 23/00, B29L 24/00, B29L 31/24

(54) **INDUKTIONSVERBINDUNGSMUFFE**
INDUCTION CONNECTION SLEEVE
MANCHON DE RACCORDEMENT À INDUCTION

(30) Priorität: 18.03.2015 AT 502192015
(43) Veröffentlichungstag der Anmeldung: 24.01.2018
(73) Patentinhaber: agru Kunststofftechnik Gesellschaft m.b.H., 4540 Bad Hall (AT)
(72) Erfinder: BINDER, Hermann, 4540 Bad Hall (AT); TAME, Josef, 4540 Pfarrkirchen (AT)
(74) Vertreter: Burger, Hannes
(86) Internationale Anmeldenummer: PCT/AT2016/050064
(87) Internationale Veröffentlichungsnummer: WO 2016/145470

(56) Entgegenhaltungen:
- WO-A1-01/20219
- WO-A1-01/20219
- WO-A1-98/37353
- WO-A1-98/37353
- WO-A1-99/46532
- WO-A1-99/46532
- WO-A2-2007/128384
- WO-A2-2007/128384
- JP-A- S6 032 632
- JP-A- S6 032 632
- JP-A- H06 278 211
- JP-A- H06 278 211
- JP-A- H06 278 211
- JP-A- 2001 208 274
- JP-A- 2001 208 274
- JP-U- H0 375 394
- JP-U- H0 375 394
- US-A- 5 252 157
- US-A- 5 252 157
- US-A- 5 433 484
- US-A- 5 433 484
- US-A- 5 462 314
- US-A- 5 462 314
- US-A- 5 505 898
- US-A- 5 505 898

## Beschreibung

Die Erfindung betrifft eine Induktionsverbindungsmuffe zum Schmelzverbinden von Kunststoffrohren, sowie ein Herstellverfahren zum Herstellen einer derartigen Induktionsverbindungsmuffe.

Die WO 2007/128384 A2 offenbart eine Induktionsverbindungsmuffe bei welcher in einem Muffenkörper zwei hülsenförmige Induktionsheizelemente eingebettet sind, welche an deren Innenmantelfläche vom Muffenkörper nicht umgeben sind und somit direkt Aufnahmeabschnitte zur Aufnahme von Verbindungsabschnitten von zu verbindenden Kunststoffrohren ausbilden. Werden die zu verbindenden Kunststoffrohre in den Muffenkörper eingeschoben, so liegt die Außenhülle der Kunststoffrohre direkt an der Innenmantelfläche der Induktionsheizelemente an. Diese Ausbildung einer Induktionsverbindungsmuffe weist den Nachteil auf, dass sich das Kunststoffrohr nur bedingt mit der Innenmantelfläche der Induktionsheizelemente verbindet.

Aus der JP2001208274A ist eine Induktionsverbindungsmuffe bekannt in welcher zwei hülsenförmig ausgebildete Induktionsheizelemente in einem Muffenkörper eingebettet sind und Aufnahmeabschnitte zur Aufnahme von Verbindungsabschnitten von zu verbindenden Kunststoffrohren umgeben. Diese Ausbildung einer Induktionsverbindungsmuffe weist den Nachteil auf, dass die Induktionsheizelemente im Herstellungsprozess der Induktionsverbindungsmuffe nur sehr schwer im Muffenkörper positioniert werden können. Bei der Verwendung einer Induktionsverbindungsmuffe mit einem nicht zentrisch positionierten Induktionsheizelement kann dies darin resultieren, dass die Aufnahmeabschnitte über den Umfang gesehen ungleichmäßig erwärmt werden.

Dokument JP H03 75394 U offenbart ein Spritzgussverfahren zur Herstellung einer Induktionsverbindungsmuffe.

Aus der WO0120219A1, der US5252157A, der US5433484A und der WO9946532A1 sind verschiedenste Verfahren zum Verbinden von zwei Kunststoffrohren mittels einer mit einem Widerstandsheizdraht ausgeführten Elektroschweißmuffe bekannt.

Der vorliegenden Erfindung liegt die Aufgabe zugrunde eine Induktionsverbindungsmuffe zu schaffen, welche einfach hergestellt werden kann und eine hohe Funktionssicherheit bietet. Diese Aufgabe der Erfindung wird durch eine Induktionsverbindungsmuffe nach Anspruch 1 bzw. durch das Verfahren zur Herstellung einer Induktionsverbindungsmuffe nach Anspruch 9 gelöst.

Erfindungsgemäß ist eine Induktionsverbindungsmuffe zum Schmelzverbinden von Kunststoffrohren ausgebildet. Die Induktionsverbindungsmuffe umfasst
einen Muffenkörper aus einem spritzgegossenen thermoplastischen Kunststoffmaterial mit einem ersten und einem zweiten Aufnahmeabschnitt zur Aufnahme von ersten und zweiten Verbindungsabschnitten der zu verbindenden Kunststoffrohre, welche Aufnahmeabschnitte koaxial zueinander angeordnet sind;
ein erstes Induktionsheizelement, welches hülsenförmig ausgebildet ist und im Umfang angeordnete Ausnehmungen aufweist und welches erste Induktionsheizelement im Muffenkörper eingebettet ist, wobei das erste Induktionsheizelement den ersten Aufnahmeabschnitt des Muffenkörpers umgibt;
ein zweites Induktionsheizelement, welches hülsenförmig ausgebildet ist und im Umfang angeordnete Ausnehmungen aufweist und welches zweite Induktionsheizelement im Muffenkörper eingebettet ist, wobei das zweite Induktionsheizelement den zweiten Aufnahmeabschnitt des Muffenkörpers umgibt. Der Muffenkörper umfasst einen Innenteil, welcher Innenteil die beiden Aufnahmeabschnitte ausbildet und an welchem die Induktionsheizelemente derart aufgenommen sind, dass die Ausnehmungen der Induktionsheizelemente vom dem Innenteil durchsetzt sind und im Bereich der Induktionsheizelemente diese an deren Außenumfang bündig mit dem Innenteil abschließen. Der Muffenkörper umfasst darüber hinaus einen Außenteil, welcher stoffschlüssig mit dem Innenteil verbunden ist und den Außenumfang der Induktionsheizelemente umgibt, wobei die Induktionsheizelemente vom Innenteil und vom Außenteil zur Gänze umschlossen sind.

Ein Vorteil der erfindungsgemäßen Ausbildung der Induktionsverbindungsmuffe liegt darin, dass durch den angegebenen Aufbau der Induktionsverbindungsmuffe die Herstellung dieser erleichtert wird, wodurch die Maßgenauigkeit der Induktionsverbindungsmuffe steigt. Insbesondere können im Herstellungsprozess die Induktionsheizelemente einfach und positionsgenau innerhalb des Muffenkörpers positioniert werden. Dadurch kann erreicht werden, dass die hülsenförmig ausgebildeten Induktionsheizelemente möglichst exakt koaxial zu den beiden Aufnahmeabschnitten des Muffenkörpers positioniert werden und die Induktionsverbindungsmuffe eine hohe Maßgenauigkeit aufweist. Bei der Verwendung einer derartigen Induktionsverbindungsmuffe zum Verbinden von zwei Kunststoffrohren kann somit erreicht werden, dass die Aufnahmeabschnitte des Muffenkörpers über den Umfang gesehen gleichmäßig erwärmt werden und somit eine gleichmäßige Aufschmelzung des Innenteils des Muffenkörpers erreicht werden kann. Dadurch weist eine Verbindung von zwei Kunststoffrohren mit der erfindungsgemäßen Induktionsverbindungsmuffe eine gute Festigkeit bzw. Dichtheit auf.

Weiters kann es zweckmäßig sein, dass das Innenteil des Muffenkörpers aus einem ersten Kunststoff aus der Gruppe von thermoplastischen Kunststoffe gebildet ist, welcher einen ersten Schmelzpunkt besitzt und dass das Außenteil des Muffenkörpers aus einem zum ersten Kunststoff unterschiedlichen, zweiten Kunststoff aus der Gruppe von thermoplastischen Kunststoffen gebildet ist, welcher einen zweiten Schmelzpunkt besitzt, wobei der Schmelzpunkt des zweiten Kunststoffes höher ist als der Schmelzpunkt des ersten Kunststoffes. Von Vorteil ist hierbei, dass dadurch erreicht werden kann, dass im Einsatz der Induktionsverbindungsmuffe bei Erwärmung des Muffenkörpers nur das Innenteil des Muffenkörpers aufschmilzt wird und das Außenteil des Muffenkörpers formstabil bleibt. Dadurch kann eine stabile und dichte Verbindung der beiden zu verbindenden Kunststofftrohre erreicht werden.

Ferner kann vorgesehen sein, dass zwischen innenteil und Außenteil eine Haftvermittlerschicht ausgebildet ist. Von Vorteil ist hierbei, dass dadurch das Innenteil und das Außenteil des Muffenkörpers fest miteinander verbunden werden können und der Muffenkörper somit eine hohe Festigkeit aufweisen kann.

Darüber hinaus kann vorgesehen sein, dass am Innenteil ein durchgehender Aufnahmeabschnitt mit zylindrischer Innenmantelfläche zur Aufnahme von Verbindungsabschnitten der zu verbindenden Kunststoffrohre ausgebildet ist, wobei der erste und der zweite Aufnahmeabschnitt im durchgehenden Aufnahmeabschnitt ausgebildet sind. Von Vorteil ist hierbei, dass insbesondere bei Montage von doppelwandigen Kunststoffrohren die Induktionsverbindungsmuffe vor dem Fügen der beiden Kunststoffrohren über eines der beiden Kunststoffrohren geschoben werden kann. Wenn die beiden Kunststoffrohre zueinander platziert sind kann die Induktionsverbindungsmuffe anschließend axial in den Verbindungsbereich der beiden Kunststoffrohre verschoben werden. Darüber hinaus ist eine derart ausgebildete Induktionsverbindungsmuffe einfach und kostengünstig herzustellen.

Ferner kann vorgesehen sein, dass eine Außenmantelfläche des Außenteils von der Längsmitte des Muffenkörpers ausgehend in Richtung zu einer Stirnfläche des Muffenkörpers sich verjüngend ausgebildet ist. Von Vorteil ist hierbei, dass der Muffenkörper dadurch einfach aus einer Spritzgussform zur Herstellung der Induktionsverbindungsmuffe entformbar ist.

Vorteilhaft ist auch eine Ausprägung, gemäß welcher vorgesehen sein kann, dass die Wandstärke des Induktionsheizelementes relativ zur Wandstärke des Innenteils des Muffenkörpes zwischen 30% und 70%, insbesondere zwischen 40% und 60%, bevorzugt zwischen 47% und 53% beträgt. Besonders bei diesem Mantelstärkenverhältnis tritt der überraschende Vorteil auf, dass bei möglichst geringer Energieeinbringung in die Induktionsheizelemente eine ausreichende Aufschmelzung des Innenteils des Muffenkörpers erreicht werden kann, um eine gute Verbindung zwischen den beiden zu verbindenden Kunststoffrohren herstellen zu können, wobei der Innenteil nicht übermäßig aufgeschmolzen wird, um eine Formstabilität des Innenteils erhalten zu können.

Gemäß einer Weiterbildung ist es möglich, dass die Breite des ersten und zweiten Induktionsheizelementes relativ zur Breite des Muffenkörpes zwischen 15% und 45%, insbesondere zwischen 25% und 35%, bevorzugt zwischen 26% und 30% beträgt. Besonders bei diesem Breitenverhältnis tritt der überraschende Vorteil auf, dass bei möglichst geringer Energieeinbringung in die Induktionsheizelemente eine ausreichende Aufschmelzung des Innenteils des Muffenkörpers erreicht werden kann, um eine gute Verbindung zwischen den beiden zu verbindenden Kunststoffrohren herstellen zu können, wobei der Innenteil nicht übermäßig aufgeschmolzen wird, um eine Formstabilität des Innenteils erhalten zu können.

Darüber hinaus kann vorgesehen sein, dass am Muffenkörper zumindest ein Positionssicherungselement angeordnet ist, welches gegenüber einem der Aufnahmeabschnitte radial in Richtung zum Zentrum des Muffenkörpers vorstehend angeordnet ist. Von Vorteil ist hierbei, dass das Positionssicherungselement einerseits zum Zentrieren der Induktionsverbindungsmuffe an einem der Kunststoffrohre dienen kann. Darüber hinaus kann die Induktionsverbindungsmuffe durch das Positionssicherungselement am Außendurchmesser eines der Kunststoffrohre geklemmt werden.

Beim Verfahren zur Herstellung einer Induktionsverbindungsmuffe ist vorgesehen, dass das Herstellverfahren folgende Verfahrensschritte umfasst:
- Einlegen eines ersten Induktionsheizelementes in eine erste Spritzgussformhälfte, wobei die erste Spritzgussformhälfte einen ersten Formhohlraum zur Aufnahme des ersten Induktionsheizelementes aufweist, welcher erste Formhohlraum einen lichten Durchmesser aufweist, der dem Außendurchmesser des ersten Induktionsheizelementes entspricht, wobei das erste Induktionsheizelement positioniert in der ersten Spritzgussformhälfte aufgenommen wird;
- Einlegen eines zweiten Induktionsheizelementes in eine mit der ersten Spritzgussformhälfte zusammenwirkende zweite Spritzgussformhälfte, wobei die zweite Spritzgussformhälfte einen zweiten Formhohlraum zur Aufnahme des zweiten Induktionsheizelementes aufweist, welcher zweite Formhohlraum einen lichten Durchmesser aufweist, der dem Außendurchmesser des zweiten Induktionsheizelementes entspricht, wobei das zweite Induktionsheizelement positioniert in der zweiten Spritzgussformhälfte aufgenommen wird;
- Aneinanderdrücken der ersten und der zweiten Spritzgussformhälfte, wobei die erste und/oder die zweite Spritzgussformhälfte einen ersten Formkern aufweist, welcher zentrisch bezüglich der Formhohlräume zur Aufnahme der Induktionsheizelemente angeordnet ist und zur Ausformung eines ersten und eines zweiten Aufnahmeabschnittes der Induktionsverbindungsmuffe dient;
- Einspritzen eines thermoplastischen Kunststoffmaterials in den ersten und den zweiten Formhohlraum, wobei ein Innenteil eines Muffenkörpers der Induktionsverbindungsmuffe gebildet wird, welcher innenseitig den ersten und den zweiten Aufnahmeabschnitt aufweist und in welchem die Induktionsheizelemente zumindest bereichsweise eingebettet sind, wobei im Umfang der Induktionsheizelemente angeordnete Ausnehmungen vom Kunststoffmaterial des Innenteils durchragt werden;
- Öffnen der ersten und der zweiten Spritzgussformhälfte;
- Auswerfen des Innenteils des Muffenkörpers mit den daran angegossenen Induktionsheizelementen aus einer der Spritzgussformhälften;
- Einlegen des Innenteils des Muffenkörpers mit den daran angegossenen Induktionsheizelementen in eine dritte Spritzgussformhälfte, wobei die dritte Spritzgussformhälfte einen dritten Formhohlraum zur Aufnahme des Innenteils des Muffenkörpers aufweist in welchem dritten Formhohlraum ein weiterer Formkern zur Positionierung des Innenteils angeordnet ist und wobei zwischen dem Außenumfang des Innenteils und dem dritten Formhohlraum ein radialer Spalt zum Ausformen eines Außenteils des Muffenkörpers ausgebildet wird;
- Schließen des dritten Formhohlraums;
- Einspritzen eines thermoplastischen Kunststoffmaterials in den dritten Formhohlraum, wobei ein Außenteil des Muffenkörpers gebildet wird;
- Öffnen des dritten Formhohlraums;
- Auswerfen der fertigen Induktionsverbindungsmuffe.

Von Vorteil an dem erfindungsgemäßen Verfahren ist, dass die Induktionsverbindungsmuffe durch die beschriebenen Verfahrensschritte derart hergestellt werden kann, dass die Induktionsheizelemente möglichst genau im Muffenkörper positioniert werden können. Darüber hinaus kann das beschriebene Herstellungsverfahren gut automatisiert werden, um derartige Induktionsverbindungsmuffen in einem Massenfertigungsverfahren herstellen zu können. Außerdem ist das Herstellungsverfahren in zwei Spritzgussschritten sehr einfach und daher kostengünstig zu realisieren.

Ferner kann es zweckmäßig sein, dass zum Schließen des dritten Formhohlraums eine vierte Spritzgussformhälfte mit einem vierten Formhohlraum bereitgestellt wird, welcher vierte Formhohlraum mit dem dritten Formhohlraum der dritten Spritzgussformhälfte zusammenwirkt. Von Vorteil ist hierbei, dass die Induktionsverbindungsmuffe dadurch symmetrisch bezüglich derer Längsmitte ausgebildet sein kann und somit einfach hergestellt werden kann. Darüber hinaus kann vorgesehen sein, dass die erste und die dritte Spritzgussformhälfte an einer gemeinsamen Aufspannplatte angeordnet sind und dass die zweite und die vierte Spritzgussformhälfte an einer gemeinsamen Aufspannplatte angeordnet sind, wobei die erste und die dritte Spritzgussformhälfte eine Düsenseite bilden und die zweite und die vierte Spritzgussformhälfte gleichzeitig miteinander bewegt werden und eine Auswerferseite bilden. Von Vorteil ist hierbei, dass somit zur Herstellung der Induktionsverbindungsmuffe nur ein Extruder vorhanden sein muss, um an der Düsenseite den Anguss ausformen zu können. Außerdem muss an der Auswerferseite nur ein Aktor vorhanden sein, welcher die zweite und die vierte Spritzgussformhälfte gleichzeitig bewegt.

Weiters kann vorgesehen sein, dass das Auswerfen des Innenteils des Muffenkörpers mit den daran angegossenen Induktionsheizelementen und/oder der fertigen Induktionsverbindungsmuffe mittels Auswerfern bewerkstelligt wird, welche in einer der Spritzgussformhälften angeordnet sind. Von Vorteil ist hierbei, dass das Innenteil des Muffenkörpers mit den daran angegossenen Induktionsheizelementen bzw. die fertige Induktionsverbindungsmuffe nicht händisch aus einer der Spritzgussformhälften genommen werden muss, sondern dass das Auswerfen automatisiert bewerkstelligt wird.

Weiters kann ein Verfahren zur Herstellung einer Schweißverbindung zwischen einem ersten Kunststoffrohr und einem zweiten Kunststoffrohr vorgesehen sein, wobei das Verfahren folgende Verfahrensschritte umfasst:
- bereitstellen des ersten Kunststoffrohres;
- bereitstellen der Induktionsverbindungsmuffe mit einem Muffenkörper, welcher eine Breite in Axialrichtung aufweist;
- aufschieben der Induktionsverbindungsmuffe auf das erste Kunststoffrohr, sodass die Induktionsverbindungsmuffe mit ihrer gesamten Breite des Muffenkörpers das erste Kunststoffrohr umgibt;
- bereitstellen des zweiten Kunststoffrohres;
- koaxiales ausrichten und unmittelbares nebeneinander anordnen des zweiten Kunststoffrohres relativ zum ersten Kunststoffrohr;
- axiales verschieben der Induktionsverbindungsmuffe, sodass diese teilweise das erste Kunststoffrohr und das zweite Kunststoffrohr umgibt;
- positionieren einer Induziervorrichtung im Bereich der Induktionsverbindungsmuffe und induzieren eines Stromes in der Induktionsverbindungsmuffe mittels der Induziervorrichtung, sodass der Muffenkörper sich zumindest teilweise erweicht und mit den beiden Kunststoffrohren stoffschlüssig verbindet.

Von Vorteil an diesem Verfahren zur Herstellung der Schweißverbindung ist, dass die Induktionsverbindungsmuffe durch Ihre Ausgestaltung zur Gänze über das erste Kunststoffrohr geschoben werden kann. Somit kann das zweite Kunststoffrohr exakt relativ zum ersten Kunststoffrohr positioniert werden.

Weiters kann vorgesehen sein, dass zum Herstellen einer Schweißverbindung zwischen doppelwandigen Kunststoffrohren mit jeweils einem Innenrohr und einem Außenrohr vor dem Verfahrensschritt des axialen Verschiebens der Induktionsverbindungsmuffe, bei dem die Induktionsverbindungsmuffe teilweise das erste Kunststoffrohr und das zweite Kunststoffrohr umgibt, zusätzlich zumindest folgender Verfahrens schritt durchgeführt wird: - verschweißen der beiden Innenrohre der doppelwandigen Kunststoffrohre. Von Vorteil ist hierbei, dass die Innenrohre separat und in einem eigenen Verfahrensschritt verschweißt werden können. Dadurch können die Innenrohre andere Eigenschaften aufweisen als die Außenrohre.

Ferner kann vorgesehen sein, dass die beiden Innenrohre der doppelwandigen Kunststoffrohre stirnseitig durch Heizelementstumpfschweißen mittels einem Schweißspiegel verschweißt werden. Von Vorteil ist hierbei, dass eine derart zwischen zwei Kunststoffrohren hergestellte Schweißverbindung hohe Festigkeitswerte bzw. eine hohe Dichtheit aufweist.

Schließlich kann vorgesehen sein, dass nach dem Verschweißen der beiden Innenrohre der doppelwandigen Kunststoffrohre und noch vor dem Verfahrensschritt des axialen Verschiebens der Induktionsverbindungsmuffe, bei dem die Induktionsverbindungsmuffe teilweise das erste Kunststoffrohr und das zweite Kunststoffrohr umgibt, die miteinander verschweißten Innenrohre einer Druckprüfung unterzogen werden. Von Vorteil ist hierbei, dass dadurch bei der Druckprüfung eine optische bzw. andersartige Kontrolle der Verschweißung der Innenrohre erfolgen kann, da diese durch die noch offenen Außenrohre einsehbar sind.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Ausführungsbeispiels einer Induktionsverbindungsmuffe zum Schmelzverbinden eines ersten zu verbindenden Kunststoffrohres mit einem zweiten zu verbindenden Kunststoffrohr;
- Fig. 2: eine perspektivische Ansicht der Induktionsverbindungsmuffe nach Fig. 1, wobei ein Außenteil des Muffenkörpers ausgeblendet ist;
- Fig. 3: eine perspektivische Ansicht eines Induktionsheizelementes;
- Fig. 4: eine Seitenansicht der Induktionsverbindungsmuffe;
- Fig. 5: eine Schnittdarstellung der Induktionsverbindungsmuffe gemäß der Schnittlinie V-V aus Fig. 4;
- Fig. 6: eine Schnittdarstellung der Induktionsverbindungsmuffe mit den damit verbundenen Kunststoffrohren gemäß der Schnittlinie V-V aus Fig. 4;
- Fig. 7: eine erste und eine zweite Formhälfte zum Herstellen der Induktionsverbindungsmuffe;
- Fig. 8: die erste und die zweite Formhälfte zum Herstellen der Induktionsverbindungsmuffe im geschlossenen Zustand;
- Fig. 9: eine dritte und eine vierte Formhälfte zum Herstellen der Induktionsverbindungsmuffe;
- Fig. 10: die dritte und eine vierte Formhälfte zum Herstellen der Induktionsverbindungsmuffe im geschlossenen Zustand;
- Fig. 11: eine perspektivische Ansicht einer möglichen Anordnung der vier Formhälften an zwei Aufspannplatten;
- Fig. 12: einen Verfahrensschritt zum Herstellen einer Schweißverbindung zwischen zwei Kunststoffrohren wobei die Induktionsverbindungsmuffe auf das erste Kunststoffrohr aufgeschoben ist;
- Fig. 13: einen Verfahrensschritt zum Herstellen einer Schweißverbindung zwischen zwei Kunststoffrohren wobei das zweite Kunststoffrohr relativ zum ersten Kunststoffrohr positioniert ist;
- Fig. 14: einen Verfahrensschritt zum Herstellen einer Schweißverbindung zwischen zwei Kunststoffrohren, wobei die Kunststoffrohre durch die Induktionsverbindungsmuffe verbunden sind;
- Fig. 15: einen Verfahrensschritt zum Herstellen einer Schweißverbindung zwischen zwei doppelwandigen Kunststoffrohren wobei die Induktionsverbindungsmuffe auf das erste Kunststoffrohr aufgeschoben ist;
- Fig. 16: einen Verfahrensschritt zum Herstellen einer Schweißverbindung zwischen zwei doppelwandigen Kunststoffrohren wobei die Innenrohre mit einem Schweißspiegel erhitzt werden;
- Fig. 17: einen Verfahrensschritt zum Herstellen einer Schweißverbindung zwischen zwei doppelwandigen Kunststoffrohren wobei die Innenrohre verschweißt werden;
- Fig. 18: einen Verfahrensschritt zum Herstellen einer Schweißverbindung zwischen zwei doppelwandigen Kunststoffrohren wobei die Außenrohre mittels der Induktionsverbindungsmuffe verschweißt werden.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

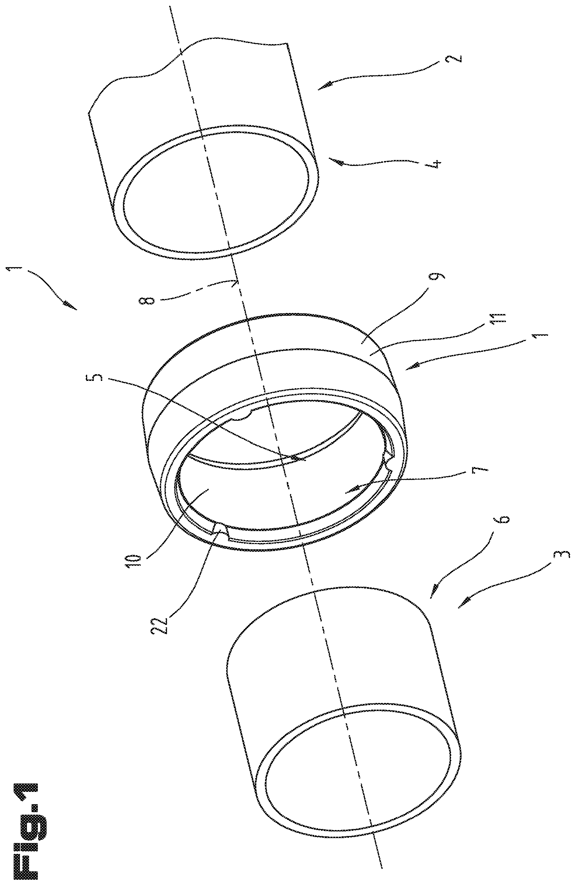

In den Figuren 1 bis 6 ist ein Ausführungsbeispiel einer Induktionsverbindungsmuffe 1 gezeigt, wobei für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Fig. 1 zeigt die perspektivische Ansicht der Induktionsverbindungsmuffe 1 zum Schmelzverbinden eines ersten zu verbindenden Kunststoffrohres 2 mit einem zweiten zu verbindenden Kunststoffrohr 3. Insbesondere ist vorgesehen, dass ein erster Verbindungsabschnitt 4 des ersten zu verbindenden Kunststoffrohres 2 in einen ersten Aufnahmeabschnitt 5 der Induktionsverbindungsmuffe 1 eingeschoben wird und dass ein zweiter Verbindungsabschnitt 6 des zweiten zu verbindenden Kunststoffrohres 3 in einen zweiten Aufnahmeabschnitt 7 der Induktionsverbindungsmuffe 1 eingeschoben wird. Mit der in diesem Dokument beschriebenen Induktionsverbindungsmuffe 1 können beispielsweise Kunststoffrohre 2, 3 aus einem thermoplastischen Kunststoffmaterial, wie etwa Polypropylen (PP), Polyethylen (PE), usw. miteinander verbunden werden.

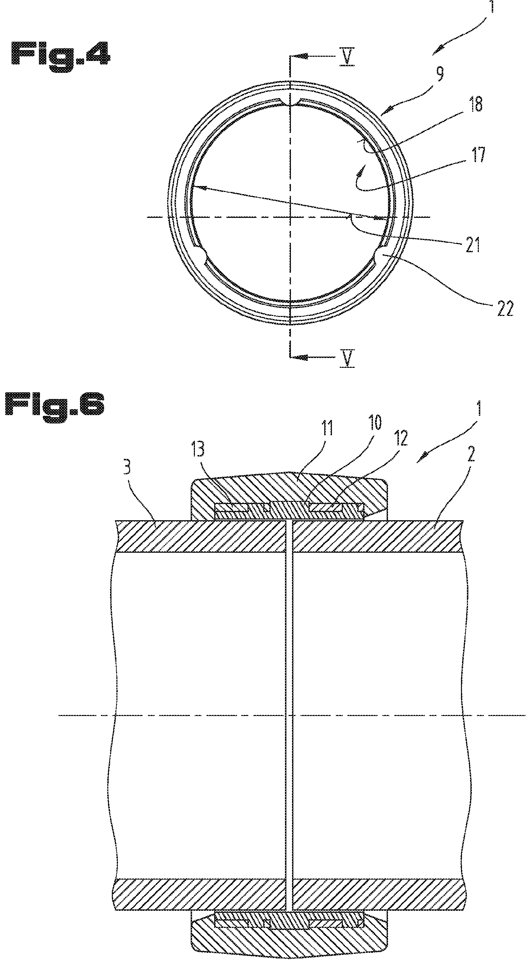

Die beiden zu verbindenden Kunststoffrohre 2, 3 sowie die Induktionsverbindungsmuffe 1 sind vorzugsweise rotationssymmetrisch ausgebildet und weisen daher eine Mittelachse 8 auf. Durch die Induktionsverbindungsmuffe 1 können die beiden zu verbindenden Kunststoffrohre 2, 3 koaxial zueinander positioniert werden und in weiterer Folge durch die Induktionsverbindungsmuffe 1 miteinander verschweißt werden. Der genaue Verschweißvorgang der Kunststoffrohre 2, 3 miteinander wird in diesem Dokument in weiterer Folge insbesondere in Fig. 6 noch näher erklärt.

Wie in Fig. 1 gut ersichtlich, umfasst die Induktionsverbindungsmuffe 1 einen Muffenkörper 9, welcher aus einem spritzgegossenen thermoplastischen Kunststoffmaterial gefertigt ist.

Der Muffenkörper 9 umfasst einen Innenteil 10 in welchem der erste Aufnahmeabschnitt 5 und der zweite Aufnahmeabschnitt 7 ausgebildet sind und eine Außenteil 11, welcher den Innenteil 10 umgibt. Die Aufnahmeabschnitte 5, 7 sind koaxial zueinander Angeordnet und in Axialrichtung zueinander versetzt.

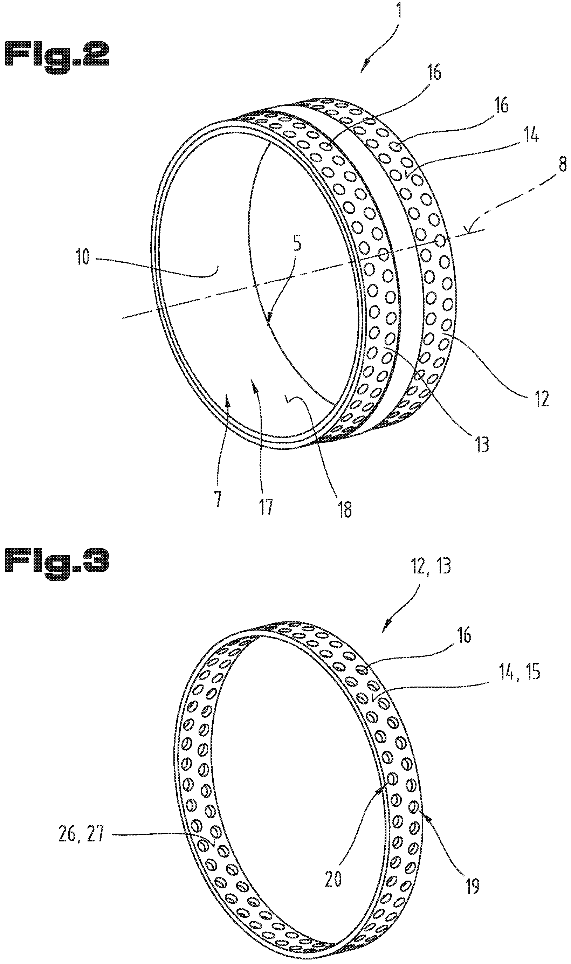

Fig. 2 zeigt eine perspektivische Ansicht der Induktionsverbindungsmuffe 1 nach Fig. 1, wobei in dieser Ansicht das Außenteil 11 des Muffenkörpers 9 ausgeblendet ist. Wie in Fig. 2 ersichtlich, ist vorgesehen, dass am Innenteil 10 des Muffenkörpers 9 ein erstes Induktionsheizelement 12 und ein zweites Induktionsheizelement 13 angeordnet sind. Die Induktionsheizelemente 12, 13 sind hülsenförmig ausgebildet und bestehen aus einem elektrisch leitfähigen Werkstoff. Ein derartiger Werkstoff zur Verwendung für ein Induktionsheizelement 12, 13 kann beispielsweise rostfreier Stahl, insbesondere Edelstahl sein.

Insbesondere ist vorgesehen, dass das erste Induktionsheizelement 12 im Außenbereich um den ersten Aufnahmeabschnitt 5 angeordnet ist und dass das zweite Induktionsheizelement 13 im Außenbereich um den zweiten Aufnahmeabschnitt 7 angeordnet ist. Wie in Fig. 2 gut ersichtlich, sind eine Außenmantelfläche 14 des ersten Induktionsheizelementes 12 und eine Außenmantelfläche 15 des zweiten Induktionsheizelementes 13 nicht vom Innenteil 10 umgossen.

Wie in Fig. 2 weiters ersichtlich, ist vorgesehen, dass im Umfang der beiden Induktionsheizelemente 12, 13 Ausnehmungen 16 angeordnet sind, welche in den Induktionsheizelementen 12, 13 Durchbrüche ausbilden. Die Ausnehmungen 16 können beispielsweise in Form von kreisrunden Ausnehmungen ausgebildet sein. Alternativ dazu können die Ausnehmungen 16 einen polygonalen Querschnitt aufweisen.

Die Induktionsheizelemente 12, 13 können beispielsweise aus einem dünnwandigen Rohrmaterial gefertigt sein. Alternativ dazu kann vorgesehen sein, dass die Induktionsheizelemente 12, 13 aus Blechstreifen gefertigt sind, welche hülsenförmig zusammengerollt werden.

Wie in Fig. 2 gut ersichtlich, kann vorgesehen sein, dass der erste Aufnahmeabschnitt 5 und der zweite Aufnahmeabschnitt 7 in einem durchgehenden Aufnahmeabschnitt 17 angeordnet sind. Bei einer derartigen Ausbildung eines durchgehenden Aufnahmeabschnittes 17 ist somit an einer Innenmantelfläche 18 des Innenteils 10 keine Abstufung ausgebildet. Die Induktionsheizelemente 12, 13 sind koaxial zueinander und koaxial zu den beiden Aufnahmeabschnitten 5, 7 bzw. zum durchgehenden Aufnahmeabschnitt 17 angeordnet.

Fig. 3 zeigt eine perspektivische Ansicht des Induktionsheizelementes 12, 13. Aus Fig. 3 ist gut ersichtlich, dass die Ausnehmungen 16 in den Induktionsheizelementen 12, 13 am Umfang verteilt angeordnet sind. Insbesondere kann vorgesehen sein, dass die Ausnehmungen 16 in einer ersten Reihe 19 und in einer zweiten Reihe 20 nebeneinander angeordnet sind. Weiters kann vorgesehen sein, dass die Ausnehmungen 16 der ersten Reihe 19 bezüglich dem Kreiswinkel des Umfanges winkelig zu den Ausnehmungen 16 der zweiten Reihe 20 versetzt sind, sodass bei einem Querschnitt durch das Induktionsheizelement 12, 13 immer nur durch eine Ausnehmung 16 einer der beiden Ausnehmungsreihen 19, 20 geschnitten wird. Dies kann dazu beitragen, dass die Stabilität des Induktionsheizelementes 12, 13 erhöht wird. Bei der Verwendung von breiteren Induktionsheizelementen 12, 13 ist auch denkbar, dass nicht nur eine erste 19 und eine zweite Ausnehmungsreihe 20 ausgebildet sind, sondern dass weitere Ausnehmungsreihen ausgebildet sind.

Fig. 4 zeigt eine Seitenansicht der Induktionsverbindungsmuffe 1. Wie aus Fig. 4 gut ersichtlich, weist der durchgehende Aufnahmeabschnitt 17 bzw. die Innenmantelfläche 18 des Innenteils 10 einen Innendurchmesser 21 auf. Der Innendurchmesser 21 ist an den Außendurchmesser der zu verbindenden Kunststoffrohre 2, 3 angepasst.

Wie in Fig. 4 gut ersichtlich, kann vorgesehen sein, dass am Muffenkörper 9 zumindest ein Positionssicherungselement 22 angeordnet ist, welches in Richtung zum Zentrum gegenüber der Innenmantelfläche 18 des Innenteils 10 vorstehend ausgebildet ist und somit die lichte Weite der Innenmantelfläche 18 verkleinert. Dadurch kann die Induktionsverbindungsmuffe 1, welche auf eines der Kunststoffrohre 2, 3 aufgeschoben ist, geklemmt und somit in seiner Position gesichert werden. Vorzugsweise kann vorgesehen sein, dass über den Umfang des Muffenkörpers 9 drei Positionssicherungselemente 22 verteilt angeordnet sind. Die Positionssicherungselemente 22 sind hierbei um 120° zueinander versetzt am Umfang verteilt. Die Positionssicherungselemente 22 können beispielsweise als halbrunde Zapfen ausgebildet sein. Weiters ist es auch denkbar, dass die Positionssicherungselemente 22 in Form von einfachen Erhebungen ausgebildet sind. In einer weiteren Ausführungsvariante kann auch eine weitere Anzahl von Positionssicherungselementen 22 vorgesehen sein.

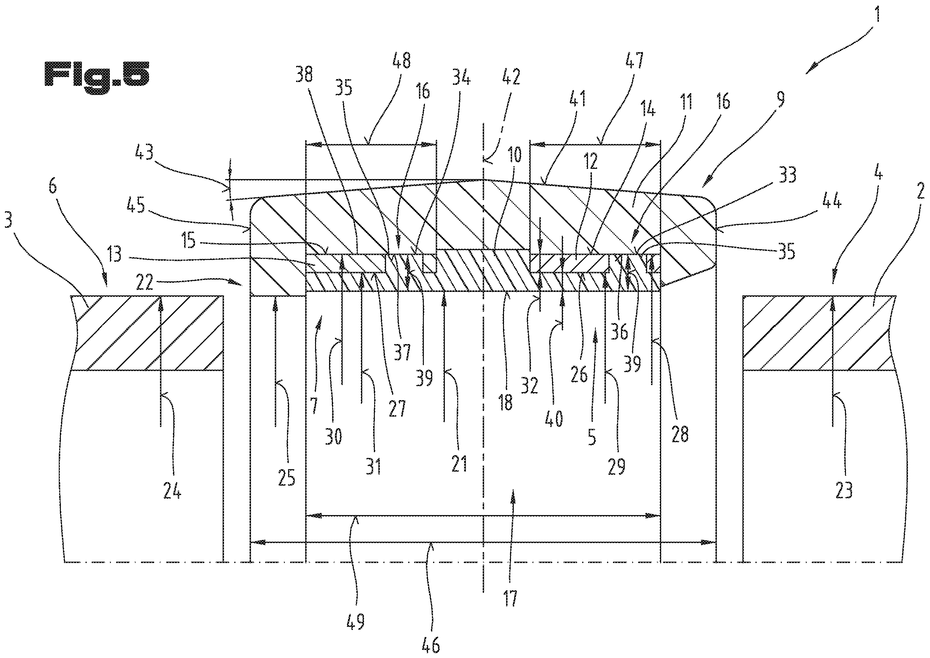

Fig. 5 zeigt eine Schnittdarstellung der Induktionsverbindungsmuffe 1, insbesondere einen Querschnitt gemäß der Schnittlinie V - V aus Fig. 4. Weiters sind in Fig. 5 die beiden zu verbindenden Kunststoffrohre 2, 3 ebenfalls in einem Querschnittdarstellung gezeigt.

Wie in Fig. 5 besonders gut ersichtlich, ist der Innendurchmesser 21 des Innenteils 10 geringfügig größer gewählt als ein Außendurchmesser 23 des ersten zu verbindenden Kunststoffrohres 2 bzw. ein Außendurchmesser 24 des zweiten zu verbindenden Kunststoffrohres 3. Dadurch kann erreicht werden, dass die Induktionsverbindungsmuffe 1 gut über die zu verbindenden Kunststoffrohre 2, 3 geschoben werden kann. Insbesondere ist es hierbei vorteilhaft, wenn eine Spielpassung zwischen Außendurchmesser 23 des ersten zu verbindenden Kunststoffrohres 2 bzw. ein Außendurchmesser 24 des zweiten zu verbindenden Kunststoffrohres 3 und Innendurchmesser 21 des Innenteils 10 gewählt wird. Von Vorteil ist, wenn der Außendurchmesser 23 des ersten zu verbindenden Kunststoffrohres 2 bzw. ein Außendurchmesser 24 des zweiten zu verbindenden Kunststoffrohres 3 in etwa gleich groß sind.

Wie besonders gut in einer Zusammenschau der Fig. 4 und 5 ersichtlich, ist das Positionssicherungselement 22 gegenüber der Innenmantelfläche 18 des Innenteils 10 vorstehend angeordnet, wodurch dieses an einem der Kunststoffrohre 2, 3 geklemmt werden kann. Insbesondere ist ein lichter Durchmesser 25 des Positionssicherungselements 22 so gewählt, dass er mit einem der Außendurchmesser 23, 24 der zu verbindenden Kunststoffrohre 2, 3 eine Übergangs- bzw. Presspassung bildet.

Das Positionssicherungselement 22 kann beispielsweise als integraler Bestandteil des Innenteils 10 oder des Außenteils 11 des Muffenkörpers 9 ausgeformt sein. Alternativ dazu ist es auch denkbar, dass das Positionssicherungselement 22 auf das Innenteil 10 oder das Außenteil 11 aufgebracht ist.

Wie in Fig. 5 weiters gut ersichtlich, weist das erste Induktionsheizelement 12 eine erste Innenmantelfläche 26 und das zweite Induktionsheizelement 13 eine zweite Innenmantelfläche 27 auf. Durch die Außenmantelfläche 14 des ersten Induktionsheizelementes 12 wird der Außendurchmesser 28 des ersten Induktionsheizelementes 12 gebildet. Durch die Innenmantelfläche 26 des ersten Induktionsheizelementes 12 wird der Innendurchmesser 29 des ersten Induktionsheizelementes 12 gebildet.

Analog dazu weist das zweite Induktionsheizelement 13 einen Außendurchmesser 30 und einen Innendurchmesser 31 auf. Die Differenz zwischen den Außendurchmessern 28, 30 und den Innendurchmessern 29, 31 der Induktionsheizelemente 12, 13 wird als Wandstärke 32 eines Induktionsheizelementes 12, 13 bezeichnet.

Im Bereich des ersten Aufnahmeabschnittes 5 bzw. des zweiten Aufnahmeabschnittes 7 weist das Innenteil 10 eine erste Außenmantelfläche 33 bzw. eine zweite Außenmantelfläche 34 auf. Die erste Außenmantelfläche 33 des Innenteils 10 schließt vorzugsweise bündig mit der Außenmantelfläche 14 des ersten Induktionsheizelementes 12 ab und die zweite Außenmantelfläche 34 schließt analog dazu bündig mit der Außenmantelfläche 15 des zweiten Induktionsheizelementes 13 ab. Dabei ist ersichtlich, dass das Innenteil 10 in Form von Noppen 35 die Ausnehmungen 16 der Induktionsheizelemente 12, 13 ausfüllt und diese durchragt.

Weiters ist in Fig. 5 ersichtlich, dass das Außenteil 11 des Muffenkörpers 9 im Bereich des ersten Aufnahmeabschnittes 5 eine erste Innenmantelfläche 36 aufweist und im Bereich des zweiten Aufnahmeabschnittes 7 eine zweite Innenmantelfläche 37 aufweist. Die beiden Innenmantelflächen 36, 37 sind vorzugsweise mit den beiden Außenmantelflächen 33, 34 des Innenteils 10 bzw. mit den Außenmantelflächen 14, 15 der Induktionsheizelemente 12, 13 deckungsgleich. Dies bedeutet insbesondere, dass das Außenteil 11 des Muffenkörpers 9 direkt an das Innenteil 10 des Muffenkörpers 9 anliegt bzw. angegossen ist.

Insbesondere im Bereich der Ausnehmungen 16 sind das Innenteil 10 und das Außenteil 11 stoffschlüssig miteinander verbunden.

In einem Ausführungsbeispiel der Induktionsverbindungsmuffe 1 kann vorgesehen sein, dass für das Innenteil 10 und für das Außenteil 11 des Muffenkörpers 9 dasselbe Kunststoffmaterial verwendet wird. Hierbei bildet sich im Bereich der Verbindungszone zwischen Innenteil 10 und Außenteil 11 ein annähernd homogener Aufbau des Kunststoffmaterials. Insbesondere kann es dadurch dazu kommen, dass keine scharfe Trennfläche zwischen Innenteil 10 und Außenteil 11 ersichtlich ist, sondern dass ein Übergangsbereich ausgebildet ist, wobei ein Übergang vom Innenteil 10 zum Außenteil 11 durch Betrachtung unter einem Rasterelektronenmikroskop sichtbar sein kann. Das Innenteil 10 bzw. das Außenteil 11 kann aus einem thermoplastischen Kunststoffmaterial, wie etwa Polypropylen (PP), Polyethylen (PE), usw. aufgebaut sein.

In einer weiteren Ausführungsvariante kann vorgesehen sein, dass das Innenteil 10 des Muffenkörpers 9 aus einem ersten Kunststoff aus der Gruppe von thermoplastischen Kunststoffe gebildet ist, welcher einen ersten Schmelzpunkt besitzt und dass das Außenteil 11 des Muffenkörpers 9 aus einem zum ersten Kunststoff unterschiedlichen, zweiten Kunststoff aus der Gruppe von thermoplastischen Kunststoffen gebildet ist, welcher einen zweiten Schmelzpunkt besitzt, wobei der Schmelzpunkt des zweiten Kunststoffes höher ist als der Schmelzpunkt des ersten Kunststoffes. Hierbei können ebenfalls verschiedene Arten von Polypropylen (PP), Polyethylen (PE), usw. verwendet werden.

In einer weiteren Ausführungsvariante kann vorgesehen sein, dass zwischen Innenteil 10 bzw. den Induktionsheizelementen 12, 13 und Außenteil 11 eine Haftvermittlerschicht 38 aufgebracht ist. Die Haftvermittlerschicht 38 kann insbesondere dazu dienen, um die Verbindung zwischen Innenteil 10 und Außenteil 11 zu stärken und somit die Festigkeit der Induktionsverbindungsmuffe 1 zu erhöhen.

Eine Wandstärke 39 des Innenteils 10 wird im Bereich des ersten Aufnahmeabschnitts 5 bzw. im Bereich des zweiten Aufnahmeabschnittes 7 gemessen. Aus der Differenz der Wandstärke 39 des Innenteils 10 und der Wandstärke 32 des Induktionsheizelementes 12, 13 ergibt sich eine Überdeckung 40. In der Überdeckung 40 ist jenes Kunststoffmaterial enthalten, welches im Zuge des Schweißvorganges aufgeschmolzen wird und sich mit den zu verbindenden Rohren 2, 3 stoffschlüssig verbindet.

Wie aus Fig. 5 weiters ersichtlich, weist das Außenteil 11 eine Außenmantelfläche 41 auf. Hierbei kann vorgesehen sein, dass die Außenmantelfläche 41 ausgehend von der Längsmitte 42 sich konisch verjüngend ausgebildet ist. Insbesondere kann vorgesehen sein, dass die Außenmantelfläche 41 in einem Konuswinkel 43 zu einer fiktiven Zylindermantelfläche angeordnet ist. Dieser Konuswinkel 43 kann zwischen 2° und 10°, insbesondere zwischen 3° und 7°, vorzugsweise zwischen 4° und 5° liegen.

Wie aus Fig. 5 weiters ersichtlich, erstreckt sich der Muffenkörper 9 bezüglich dessen Längserstreckung zwischen einer ersten Stirnfläche 44 und einer zweiten Stirnfläche 45. Insbesondere kann hierbei vorgesehen sein, dass die erste Stirnfläche 44 und die zweite Stirnfläche 45 duch das Außenteil 11 gebildet werden. Durch die Stirnflächen 44, 45 ergibt sich eine Breite 46 in Axialrichtung des Muffenkörpers 9.

Die Induktionsheizelemente 12, 13 weisen eine Breite 47 bzw. 48 auf. In einem bevorzugten Ausführungsbeispiel sind die Induktionsheizelemente 12, 13 baugleich ausgeführt, sodass sie dieselben Maße aufweisen. Das Innenteil 10 weist eine Breite 49 auf. Hierbei kann vorgesehen sein, dass die Breite 49 kleiner ist als die Breite 46 des Muffenkörpers 9.

Fig. 6 zeigt die Induktionsverbindungsmuffe 1 bzw. die zwei zu verbindenden Kunststoffrohre 2, 3 in einer Querschnittsdarstellung gemäß der Schnittlinie V-V aus Fig. 4.

In der Darstellung in Fig. 6 sind die zwei zu verbindenden Kunststoffrohre 2, 3 bzw. die Induktionsverbindungsmuffe 1 so zueinander positioniert, dass der Verschweißvorgang gestartet werden kann. Hierbei werden mittels einer Induktionsspule die Induktionsheizelemente 12, 13 derart erhitzt, dass zumindest das Innenteil 10 aufgeschmolzen wird. Insbesondere soll hierbei erreicht werden, dass das Innenteil 10 im Bereich der Überdeckung 40 aufschmilzt. Durch diesen Aufschmelzvorgang verbindet sich das Kunststoffmaterial des Innenteils 10 mit dem ersten zu verbindenden Kunststoffrohr 2 bzw. mit dem zweiten zu verbindenden Kunststoffrohr 3. Dadurch wird zwischen den Kunststoffrohren 2, 3 und der Induktionsverbindungsmuffe 1 eine stoffschlüssige Verbindung geschaffen, sobald das aufgeschmolzene Kunststoffmaterial wieder erstarrt ist.

In einem möglichen Ausführungsbeispiel weist die Induktionsverbindungsmuffe 1 eine Breite 46 des Muffenkörpers 9 von 25mm auf. Die Breite 49 des Innenteils 10 dieser Induktionsverbindungsmuffe 1 beträgt 19mm. Die Breite 47, 48 der Induktionsheizelemente 12, 13 beträgt 7mm. Der Durchmesser der Ausnehmungen 16 beträgt 2mm. Die Wandstärke 32 der Induktionsheizelemente 12, 13 beträgt 1mm. Die Wandstärke 39 des Innenteils 10 beträgt 2mm. Der Innendurchmesser 21 des Innenteils 10 beträgt 50,5mm. Der lichte Durchmesser 25 des Positionssicherungselementes 25 beträgt 50mm. Eine derart dimensionierte Induktionsverbindungsmuffe 1 kann zum Verbinden von Kunststoffrohren 2, 3 mit einem Außendurchmesser 23, 24 von 50mm verwendet werden.

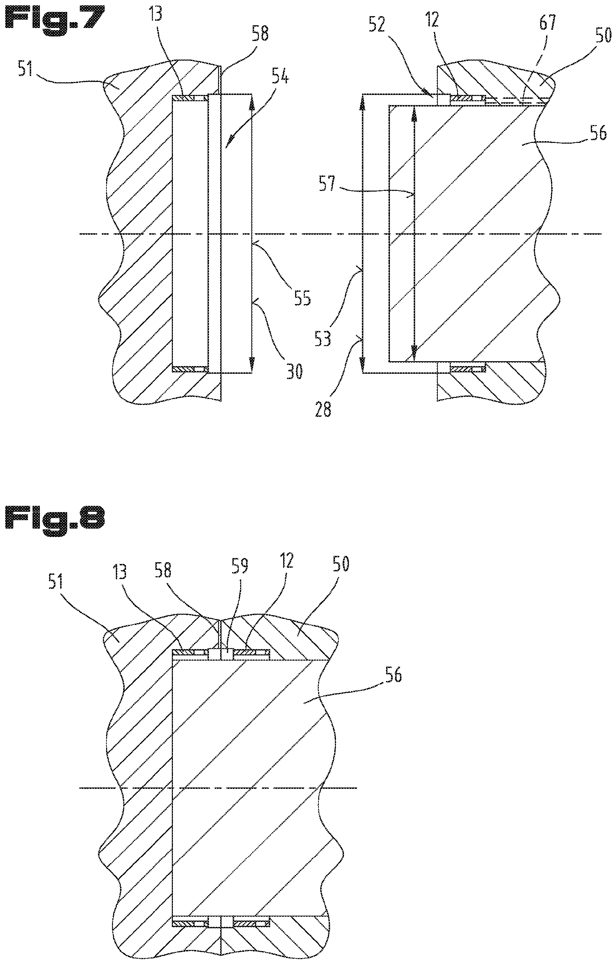

Anhand der Fig. 7 bis 10 wird das Fertigungsverfahren zur Herstellung der Induktionsverbindungsmuffe 1 beschrieben. Insbesondere werden in diesen Figuren die benötigten Spritzgussformen zur Herstellung der Induktionsverbindungsmuffe gezeigt.

In Fig. 7 ist eine erste Spritzgussformhälfte 50 und eine zweite Spritzgussformhälfte 51 in einer Schnittdarstellung dargestellt. Hierbei ist ersichtlich, dass die erste Spritzgussformhälfte 50 einen ersten Formhohlraum 52 aufweist, in welchen das erste Induktionsheizelement 12 eingelegt wird. Der erste Formhohlraum 52 weist hierbei einen lichten Durchmesser 53 auf, welcher mit dem Außendurchmesser 28 des ersten Induktionsheizelementes 12 korrespondiert. Dadurch kann das erste Induktionsheizelement 12 positioniert in der ersten Spritzgussformhälfte 50 aufgenommen werden.

Die zweite Spritzgussformhälfte 51 weist einen zweiten Formhohlraum 54 auf, in welchem das zweite Induktionsheizelement 13 aufgenommen werden kann. Analog zur ersten Spritzgussformhälfte 50 weist der zweite Formhohlraum 54 der zweiten Spritzgussformhälfte 51 einen lichten Durchmesser 55 auf, welcher dem Außendurchmesser 30 des zweiten Induktionsheizelementes 13 entspricht. Weiters ist vorgesehen, dass entweder in der ersten Spritzgussformhälfte 50 oder in der zweiten Spritzgussformhälfte 51 ein erster Formkern 56 angeordnet ist, welcher in weiterer Folge die Innenmantelfläche 18 des Innenteils 10 des Muffenkörpers 9 ausbildet. Insbesondere ist vorgesehen, dass der Durchmesser 57 des ersten Formkernes 56 dem Innendurchmesser 21 des Innenteils 10 entspricht.

Wie aus Fig. 7 weiters ersichtlich, kann vorgesehen sein, dass in der zweiten Spritzgussformhälfte 51 ein erster Anguss 58 ausgebildet ist, welcher zur Zuführung von aufgeschmolzenem Kunststoffmaterial dient. Die zweite Spritzgussformhälfte 51 wird daher in der Fachsprache auch als Düsenseite bezeichnet.

Die erste Spritzgussformhälfte 50 wird in der Fachsprache als Auswerferseite bezeichnet. Insbesondere kann hierbei vorgesehen sein, dass die zweite Spritzgussformhälfte 51 positionsstarr an der Spritzgussmaschine angeordnet ist und dass die erste Spritzgussformhälfte 50 relativ zur zweiten Spritzgussformhälfte 51 verschiebbar an der Spritzgussmaschine angeordnet ist.

In der Darstellung nach Fig. 8 ist die erste Spritzgussformhälfte 50 so weit in Richtung zweiter Spritzgussformhälfte 51 bewegt, dass die Formhohlräume 52, 54 geschlossen sind und ein Freiraum 59 ausgebildet ist. Somit kann der Einspritzvorgang des Kunststoffmaterials gestartet werden. Im Zuge des Spritzgießvorganges wird der Freiraum 59 mit plastifiziertem Kunststoffmaterial befüllt. Insbesondere wird durch diesen Verfahrensschritt in einem ersten Spritzgussvorgang das Innenteil 10 des Muffenkörpers 9 erzeugt.

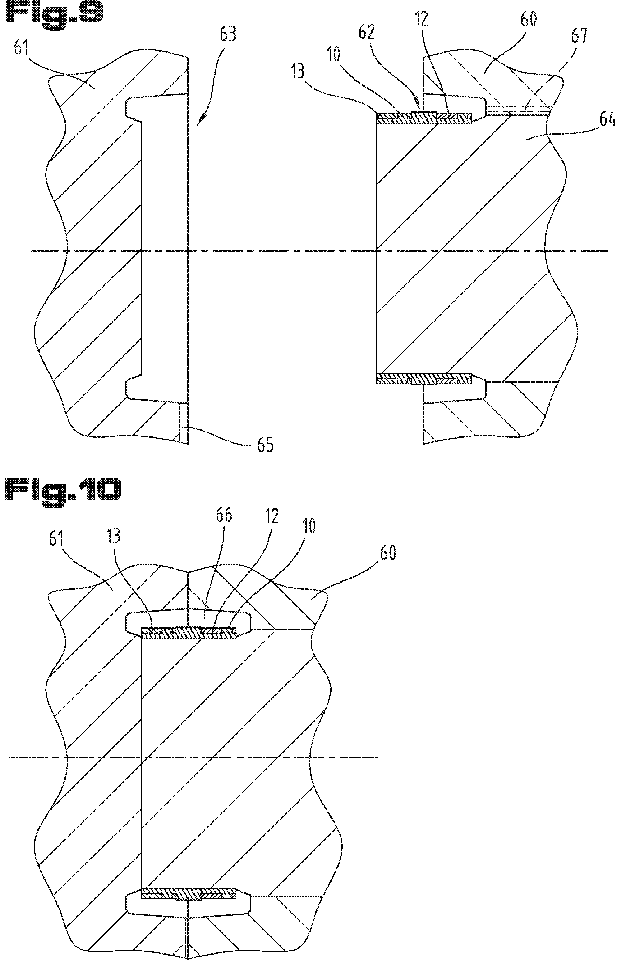

In einem anschließenden Verfahrensschritt werden die beiden Spritzgussformhälften 50, 51 wieder geöffnet und das Innenteil 10 des Muffenkörpers 9 mit den Induktionsheizelementen 12, 13 aus der Spritzgussformhälfte 50, 51 herausgenommen und entsprechend der Darstellung in den Fig. 9 und 10 weiterverarbeitet.

Fig. 9 zeigt einen Schnitt durch eine dritte Spritzgussformhälfte 60 und eine vierte Spritzgussformhälfte 61. Wie aus Fig. 9 weiters ersichtlich, kann vorgesehen sein, dass in der dritten Spritzgussformhälfte 60 ein dritter Formhohlraum 62 ausgebildet ist, welcher mit einem vierten Formhohlraum 63 der vierten Spritzgussformhälfte 61 zusammenwirkt. Insbesondere ist hierbei vorgesehen, dass der dritte und der vierte Formhohlraum 62, 63 die Kontur der Außenmantelfläche 41 des Außenteils 11 bildet. Wie aus Fig. 9 weiters ersichtlich, ist in der dritten 60 oder der vierten Spritzgussformhälfte 61 ein weiterer Formkern 64 vorgesehen, welcher zur Aufnahme des Innenteils 10 mit den Induktionsheizelementen 12, 13 dient. Wie aus Fig. 9 ersichtlich, kann vorgesehen sein, dass in der dritten 60 oder der vierten Spritzgussformhälfte 61 ein zweiter Anguss 65 zur Versorgung mit Kunststoffmaterial vorgesehen ist.

In einem weiteren Verfahrensschritt wird die dritte Spritzgussformhälfte 60 in Richtung vierter Spritzgussformhälfte 61 bewegt bis die Spritzgussformhälften 60, 61 eine geschlossene Position entsprechend Fig. 10 einnehmen.

Wie aus Fig. 10 ersichtlich, wird durch den dritten Formhohlraum 62 und den vierten Formhohlraum 63 ein radialer Spalt 66 ausgebildet, welcher zur Ausbildung des Außenteils 11 dient.

Entsprechend einer nicht dargestellten Ausführungsvariante kann auch vorgesehen sein, dass die dritte 60 und die vierte Spritzgussformhälfte 61 derart aufgebaut sind, dass beispielsweise nur in der dritten Spritzgussformhälfte 60 ein Formhohlraum 62 ausgebildet ist, welcher zur Formgebung für die komplette Induktionsverbindungsmuffe 1 vorgesehen ist und dass die vierte Spritzgussformhälfte 61 als Deckel ohne Ausnehmung zum Schließen der dritten Spritzgussformhälfte 60 ausgebildet ist.

Wie in den Figuren 7 und 9 schematisch dargestellt, kann vorgesehen sein, dass ein Auswerfer 67 vorgesehen ist, welcher zum Auswerfen des Innenteils 10 des Muffenkörpers 9 mit den Induktionsheizelementen 12, 13 aus der ersten 50 oder der zweiten Spritzgussformhälfte 51 dient. Analog dazu kann vorgesehen sein, dass das Auswerfen der fertigen Induktionsverbindungsmuffe 1 mittels einem Auswerfer 67 bewerkstelligt wird, welcher in der dritten oder vierten Spritzgussformhälfte 60, 61 angeordnet ist.

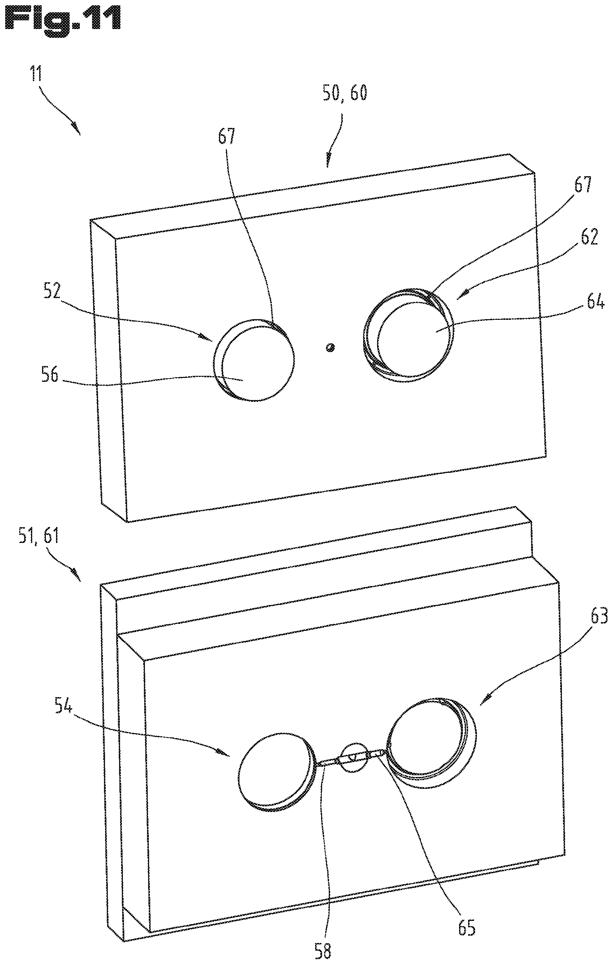

In der Fig. 11 ist eine weitere und gegebenenfalls für sich eigenständige Ausführungsform einer Vorrichtung 68 zur Herstellung der Induktionsverbindungsmuffe 1 gezeigt, wobei wiederum für gleiche Teile gleiche Bezugszeichen bzw. Bauteilbezeichnungen wie in den vorangegangenen Figuren 7 bis 10 verwendet werden. Um unnötige Wiederholungen zu vermeiden, wird auf die detaillierte Beschreibung in den vorangegangenen Figuren 7 bis 10 hingewiesen bzw. Bezug genommen.

Fig. 11 zeigt eine perspektivische Ansicht der Vorrichtung 68 zur Herstellung der Induktionsverbindungsmuffe 1. Hierbei ist ersichtlich, dass vorgesehen sein kann, dass die erste 50 und die dritte Spritzgussformhälfte 60 an einer gemeinsamen Aufspannplatte angeordnet sein können. Weiters können die zweite 51 und die vierte Spritzgussformhälfte 61 an einer gemeinsamen Aufspannplatte angeordnet sein. Die beiden Aufspannplatten sind derart gedreht dargestellt, sodass die Formhohlräume 52, 54, 62, 63 sichtbar sind.

Wie aus Fig. 11 weiter ersichtlich, kann vorgesehen sein, dass der erste Anguss 58 und der zweite Anguss 65 durch einen gemeinsamen Angusskanal gespeist werden.

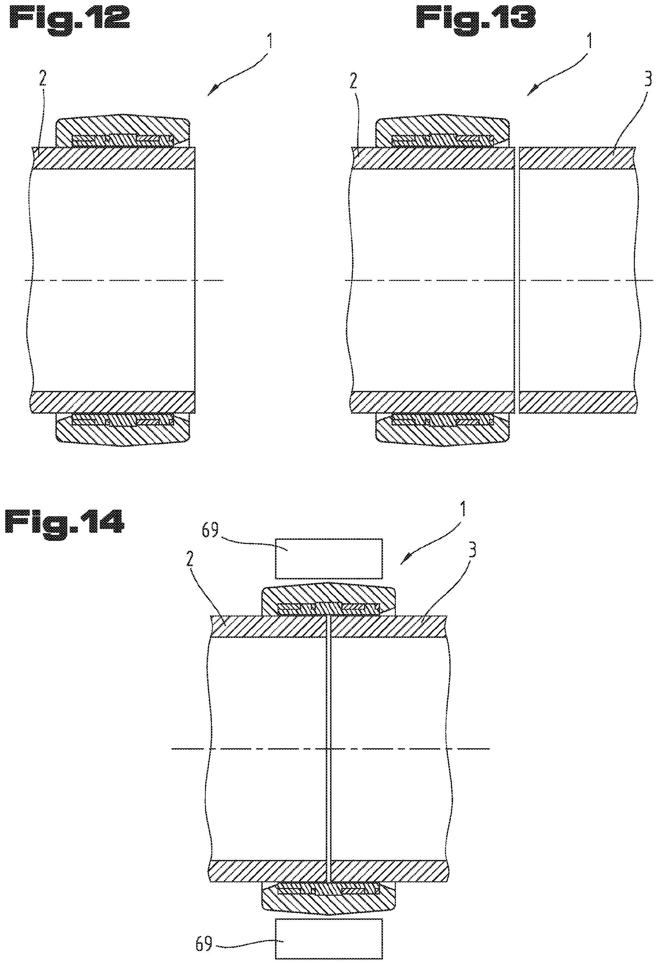

In den Figuren 12 bis 14 sind die einzelnen Verfahrens schritte eines möglichen Verfahrens zum Herstellen einer Schweißverbindung zwischen dem ersten Kunststoffrohr 2 und dem zweiten Kunststoffrohr 3 gezeigt, wobei die Schweißverbindung unter Zuhilfenahme der Induktionsverbindungsmuffe 1 hergestellt wird. Die Kunststoffrohre 2, 3, welche in diesen Verfahrensschritten dargestellt sind, sind einwandige Kunststoffrohre 2, 3.

Fig. 12 zeigt den ersten Verfahrensschritt zum Herstellen der Schweißverbindung. Aus dieser Figur ist ersichtlich, dass das erste Kunststoffrohr 2 und die Induktionsverbindungsmuffe 1 bereitgestellt werden, wobei die Induktionsverbindungsmuffe 1 auf das erste Kunststoffrohr 2 aufgeschoben wird. Die Induktionsverbindungsmuffe 1 wird so weit auf das erste Kunststoffrohr 2 aufgeschoben, bis die Induktionsverbindungsmuffe 1 nicht mehr gegenüber einer Stirnfläche des ersten Kunststoffrohres 2 vorsteht. Mit anderen Worten ausgedrückt wird die Induktionsverbindungsmuffe 1 so weit auf das erste Kunststoffrohr 2 aufgeschoben, bis die volle Breite 46 des Muffenkörpers 9 den Außendurchmesser 23 des ersten Kunststoffrohres 2 umgibt. Damit überdeckt bzw. übergreift der Muffenkörper 9 mit seiner gesamten Breite 46 das erste Kunststoffrohr 2 in Axialrichtung.

In einem weiteren Verfahrensschritt wird dann entsprechend Fig. 13 das zweite Kunststoffrohr 3 relativ zum ersten Kunststoffrohr 2 positioniert. Es kann vorgesehen sein, dass die beiden Kunststoffrohre 2, 3 zueinander beabstandet sind, oder aber auch, dass die beiden Kunststoffrohre 2, 3 an deren Stirnseite dicht an dicht aneinander anliegen.

In einem weiteren Verfahrensschritt, welcher in Fig. 14 dargestellt ist, wird die Induktionsverbindungsmuffe 1 so über die beiden Kunststoffrohre 2, 3 verschoben, dass sie beide zumindest teilweise überdeckt. Vorzugsweise wird die Induktionsverbindungsmuffe 1 derart zwischen den beiden Kunststoffrohren 2, 3 platziert, dass sie diese zu gleichen Teilen überdeckt, das heißt mittig zwischen diesen platziert ist.

Wenn die Induktionsverbindungsmuffe 1 richtig platziert ist, so wird in einem weiteren Verfahrensschritt, welcher ebenfalls in Fig. 14 dargestellt ist, eine Induziervorrichtung 69 im Bereich der Induktionsverbindungsmuffe 1 platziert und aktiviert. Durch die Induziervorrichtung 69 wird Strom in den beiden Induktionsheizelementen 12, 13 induziert. Dadurch erwärmen sich die Induktionsheizelementen 12, 13 und sorgen somit dafür, dass der Kunststoff des Innenteils 10 des Muffenkörpers 9 erweicht oder zumindest teilweise aufschmilzt und sich dadurch mit den Kunststoffrohren 2, 3 verbinden kann. Dadurch wird eine stoffschlüssige Verbindung zwischen Muffenkörper 9 und den beiden Kunststoffrohren 2, 3 hergestellt.

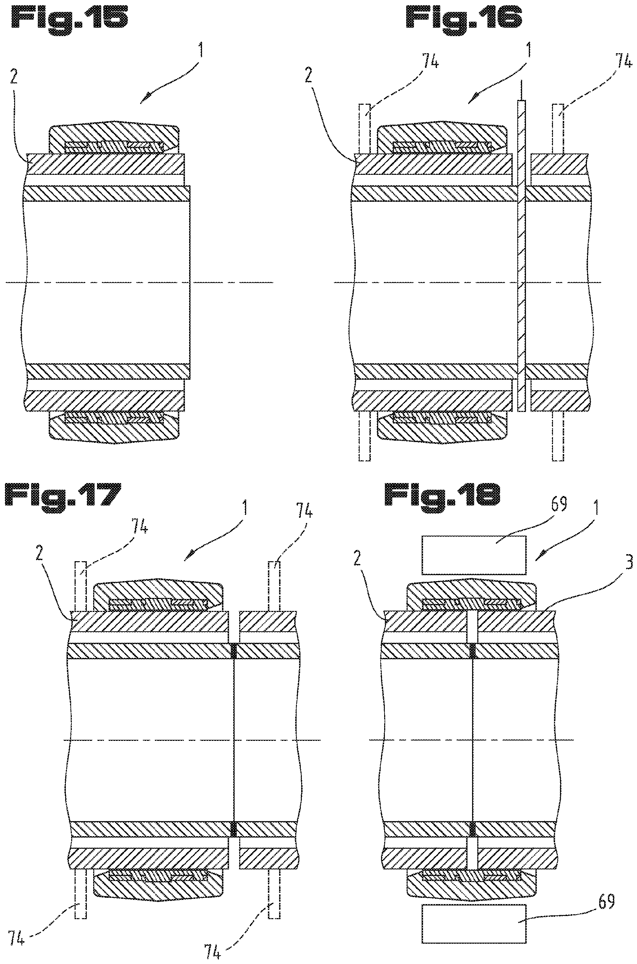

In den Figuren 15 bis 18 sind die einzelnen Verfahrens schritte eines weiteren möglichen Verfahrens zum Herstellen einer Schweißverbindung zwischen dem ersten Kunststoffrohr 2 und dem zweiten Kunststoffrohr 3 gezeigt, wobei hier zwei doppelwandige Kunststoffrohre 2, 3 miteinander verbunden werden.

Die beiden doppelwandigen Kunststoffrohre 2, 3 weisen jeweils ein Innenrohr 70, 71 auf, welches innerhalb eines Außenrohres 72, 73 angeordnet ist, wobei das Innenrohr 70, 71 und das zugehörige Außenrohr 72, 73 beispielsweise durch einen Steg miteinander verbunden sind, sodass diese koaxial zueinander liegen.

Der Verfahrensschritt nach Fig. 15 ist gleich dem Verfahrensschritt nach Fig. 12, wobei in diesem Verfahrensschritt die Induktionsverbindungsmuffe 1 auf das erste Kunststoffrohr 2 aufgeschoben wird.

In einem weiteren Verfahrensschritt, welcher in Fig. 16 dargestellt ist, werden die beiden Kunststoffrohre 2, 3 mittels einer Klemmvorrichtung 74 gehalten und an ein Heizelement oder auch Schweißspiegel 75 angedrückt. Die beiden Kunststoffrohre 2, 3 sind hierbei derart ausgebildet, dass nur die Stirnseiten der beiden Innenrohre 70, 71 aneinander anliegen. Mit anderen Worten ausgedrückt sind die beiden Innenrohre 70, 71 stirnseitig gegenüber den Außenrohren 72, 73 vorstehend ausgebildet.

Die Anpresskraft mit welcher die beiden Innenrohre 70, 71 hierbei aneinander gedrückt werden bzw. die Anpresszeit und die Heizelementtemperatur ist von der Beschaffenheit bzw. der Geometrie der Innenrohre 70, 71 abhängig.

In einem weiteren Verfahrensschritt, wie in Fig. 17 dargestellt wird der Schweißspiegel 75 aus der Lage zwischen den beiden Innenrohren 70, 71 entfernt und diese werden durch die Klemmvorrichtung 74 stumpf aneinander gedrückt. Durch die Vorerwärmung mittels dem Schweißspiegel 75 und durch den mittels der Klemmvorrichtung 74 ausgeübten Druck können sich die beiden Innenrohre 70, 71 stoffschlüssig miteinander verbinden. Wenn die beiden Innenrohre 70, 71 miteinander verbunden sind, kann die Klemmvorrichtung 74 entfernt werden.

In einer Alternativvariante kann vorgesehen sein, dass zum Verschweißen der Innenrohre ein anderes Schweißverfahren verwendet wird.

In einem weiteren Verfahrensschritt kann anschließend eine Dichtheitsprüfung durchgeführt werden, wobei die beiden miteinander verbundenen Innenrohre 70, 71 mit Druck beaufschlagt werden. Durch den Ringspalt in den Außenrohren 72, 73, wie er in Fig. 17 gut ersichtlich ist, kann die Dichtheit der Schweißverbindung der Innenrohre 70, 71 überprüft werden.

Nach erfolgter Dichtheitsprüfung kann in einem weiteren Verfahrensschritt, wie er in Fig. 17 dargestellt ist, die Induktionsverbindungsmuffe 1 über die beiden Kunststoffrohre 2, 3 verschoben werden und entsprechend den bereits zu Fig. 14 beschriebenen Verfahrensschritten verschweißt werden.

Der Ordnung halber sei abschließend darauf hingewiesen, dass zum besseren Verständnis des Aufbaus der Induktionsverbindungsmuffe 1 bzw. der Vorrichtung 68 zur Herstellung der Induktionsverbindungsmuffe 1 diese bzw. deren Bestandteile teilweise unmaßstäblich und/oder vergrößert und/oder verkleinert dargestellt wurden.

### Bezugszeichenaufstellung

| | | | |
|---|---|---|---|
| 1 | Induktionsverbindungsmuffe | 24 | Außendurchmesser zweites zu verbindendes Kunststoffrohr |
| 2 | erstes zu verbindendes Kunststoffrohr | | |
| | | 25 | lichter Durchmesser Positionssicherungselement |
| 3 | zweites zu verbindendes Kunststoffrohr | | |
| | | 26 | Innenmantelfläche erstes Induktionsheizelement |
| 4 | erster Verbindungsabschnitt | | |
| 5 | erster Aufnahmeabschnitt | 27 | Innenmantelfläche zweites Induktionsheizelement |
| 6 | zweiter Verbindungsabschnitt | | |
| 7 | zweiter Aufnahmeabschnitt | 28 | Außendurchmesser erstes Induktionsheizelement |
| 8 | Mittelachse | | |
| 9 | Muffenkörper | 29 | Innendurchmesser erstes Induktionsheizelement |
| 10 | Innenteil des Muffenkörpers | | |
| 11 | Außenteil des Muffenkörpers | 30 | Außendurchmesser zweites Induktionsheizelement |
| 12 | erstes Induktionsheizelement | | |
| 13 | zweites Induktionsheizelement | 31 | Innendurchmesser zweites Induktionsheizelement |
| 14 | Außenmantelfläche erstes Induktionsheizelement | | |
| | | 32 | Wandstärke Induktionsheizelement |
| 15 | Außenmantelfläche zweites Induktionsheizelement | 33 | erste Außenmantelfläche Innenteil |
| | | 34 | zweite Außenmantelfläche Innenteil |
| 16 | Ausnehmung in Induktionsheizelement | | |
| | | 35 | Noppe |
| 17 | durchgehender Aufnahmeabschnitt | 36 | erste Innenmantelfläche Außenteil |
| 18 | Innenmantelfläche Innenteil | 37 | zweite Innenmantelfläche Außenteil |
| 19 | erste Ausnehmungsreihe | | |
| 20 | zweite Ausnehmungsreihe | 38 | Haftvermittlerschicht |
| 21 | Innendurchmesser Innenteil | 39 | Wandstärke Innenteil |
| 22 | Positionssicherungselement | 40 | Überdeckung |
| 23 | Außendurchmesser erstes zu verbindendes Kunststoffrohr | 41 | Außenmantelfläche Außenteil |
| | | 42 | Längsmitte |
| | | 43 | Konuswinkel |
| 44 | erste Stirnfläche Muffenkörper | 72 | erstes Außenrohr |
| 45 | zweite Stirnfläche Muffenkörper | 73 | zweites Außenrohr |
| 46 | Breite Muffenkörper | 74 | Klemmvorrichtung |
| 47 | Breite erstes Induktionsheizelement | 75 | Schweißspiegel |
| 48 | Breite zweites Induktionsheizelement | | |
| 49 | Breite Innenteil | | |
| 50 | erste Spritzgussformhälfte | | |
| 51 | zweite Spritzgussformhälfte | | |
| 52 | erster Formhohlraum | | |
| 53 | lichter Durchmesser erster Formhohlraum | | |
| 54 | zweiter Formhohlraum | | |
| 55 | lichter Durchmesser zweiter Formhohlraum | | |
| 56 | erster Formkern | | |
| 57 | Durchmesser erster Formkern | | |
| 58 | erster Anguss | | |
| 59 | Freiraum | | |
| 60 | dritte Spritzgussformhälfte | | |
| 61 | vierte Spritzgussformhälfte | | |
| 62 | dritter Formhohlraum | | |
| 63 | vierter Formhohlraum | | |
| 64 | weiterer Formkern | | |
| 65 | zweiter Anguss | | |
| 66 | radialer Spalt | | |
| 67 | Auswerfer | | |
| 68 | Vorrichtung zur Herstellung der Induktionsverbindungsmuffe | | |
| 69 | Induziervorrichtung | | |
| 70 | erstes Innenrohr | | |
| 71 | zweites Innenrohr | | |

## Patentansprüche

1. Induktionsverbindungsmuffe (1) zum Schmelzverbinden von Kunststoffrohren (2, 3), umfassend:
einen Muffenkörper (9) aus einem spritzgegossenen thermoplastischen Kunststoffmaterial mit einem ersten (5) und einem zweiten Aufnahmeabschnitt (7) zur Aufnahme von ersten (4) und zweiten Verbindungsabschnitten (6) der zu verbindenden Kunststoffrohre (2, 3), welche Aufnahmeabschnitte (5, 7) koaxial zueinander angeordnet sind;
ein erstes Induktionsheizelement (12), welches hülsenförmig ausgebildet ist und im Umfang angeordnete Ausnehmungen (16) aufweist und welches erste Induktionsheizelement (12) im Muffenkörper (9) eingebettet ist, wobei das erste Induktionsheizelement (12) den ersten Aufnahmeabschnitt (5) des Muffenkörpers (9) umgibt;
ein zweites Induktionsheizelement (13), welches hülsenförmig ausgebildet ist und im Umfang angeordnete Ausnehmungen (16) aufweist und welches zweite Induktionsheizelement (13) im Muffenkörper (9) eingebettet ist, wobei das zweite Induktionsheizelement (13) den zweiten Aufnahmeabschnitt (7) des Muffenkörpers (9) umgibt,
**dadurch gekennzeichnet, dass** der Muffenkörper (9) einen Innenteil (10) umfasst, welcher Innenteil (10) die beiden Aufnahmeabschnitte (5, 7) ausbildet und an welchem die Induktionsheizelemente (12, 13) derart aufgenommen sind, dass die Ausnehmungen (16) der Induktionsheizelemente (12) von dem Innenteil (10) durchsetzt sind und im Bereich der Induktionsheizelemente (12, 13) diese an deren Außenmantelflächen (14, 15) bündig mit dem Innenteil (10) abschließen und dass der Muffenkörper (9) einen Außenteil (11) umfasst, welcher stoffschlüssig mit dem Innenteil (10) verbunden ist und die Außenmantelflächen (14, 15) der Induktionsheizelemente (12, 13) umgibt, wobei die Induktionsheizelemente (12, 13) vom Innenteil (10) und vom Außenteil (11) zur Gänze umschlossen sind.

2. Induktionsverbindungsmuffe nach Anspruch 1, **dadurch gekennzeichnet, dass** das Innenteil (10) des Muffenkörpers (9) aus einem ersten Kunststoff aus der Gruppe von thermoplastischen Kunststoffe gebildet ist, welcher einen ersten Schmelzpunkt besitzt und dass das Außenteil (11) des Muffenkörpers (9) aus einem zum ersten Kunststoff unterschiedlichen, zweiten Kunststoff aus der Gruppe von thermoplastischen Kunststoffen gebildet ist, welcher einen zweiten Schmelzpunkt besitzt, wobei der Schmelzpunkt des zweiten Kunststoffes höher ist als der Schmelzpunkt des ersten Kunststoffes.

3. Induktionsverbindungsmuffe nach Anspruch 1 oder 2, **dadurch gekennzeichnet, dass** zwischen Innenteil (10) und Außenteil (11) eine Haftvermittlerschicht (38) ausgebildet ist.

4. Induktionsverbindungsmuffe nach einem der vorhergehenden Ansprüche, **dadurch gekennzeichnet, dass** am Innenteil (10) ein durchgehender Aufnahmeabschnitt (17) mit zylindrischer Innenmantelfläche (18) zur Aufnahme von Verbindungsabschnitten (4, 6) der zu verbindenden Kunststoffrohre (2, 3) ausgebildet ist, wobei der erste und der zweite Aufnahmeabschnitt (7) im durchgehenden Aufnahmeabschnitt (17) ausgebildet sind.

5. Induktionsverbindungsmuffe nach einem der vorhergehenden Ansprüche, **dadurch gekennzeichnet, dass** eine Außenmantelfläche (41) des Außenteils (11) von der Längsmitte des Muffenkörpers (9) ausgehend in Richtung zu einer Stirnfläche (44, 45) des Muffenkörpers (9) sich verjüngend ausgebildet ist.

6. Induktionsverbindungsmuffe nach einem der vorhergehenden Ansprüche, **dadurch gekennzeichnet, dass** die Wandstärke (32) des Induktionsheizelementes (12) relativ zur Wandstärke (39) des Innenteils (10) des Muffenkörpes zwischen 40% und 60% beträgt.

7. Induktionsverbindungsmuffe nach einem der vorhergehenden Ansprüche, **dadurch gekennzeichnet, dass** die Breite (47, 48) des ersten (12) und zweiten Induktionsheizelementes (13) relativ zu einer Breite (46) in Axialrichtung des Muffenkörpes (9) zwischen 25% und 35% beträgt.

8. Induktionsverbindungsmuffe nach einem der vorhergehenden Ansprüche, **dadurch gekennzeichnet, dass** am Muffenkörper (9) zumindest ein Positionssicherungselement (22) angeordnet ist, welches gegenüber einem der Aufnahmeabschnitte (5, 7) radial in Richtung zum Zentrum des Muffenkörpers (9) vorstehend angeordnet ist.

9. Verfahren zur Herstellung einer Induktionsverbindungsmuffe (1), insbesondere einer Induktionsverbindungsmuffe (1) nach einem der vorhergehenden Ansprüche, **dadurch gekennzeichnet, dass** das Herstellverfahren folgende Verfahrensschritte umfasst:
- Einlegen eines ersten Induktionsheizelementes (12) in eine erste Spritzgussformhälfte (50), wobei die erste Spritzgussformhälfte (50) einen ersten Formhohlraum (52) zur Aufnahme des ersten Induktionsheizelementes (12) aufweist, welcher erste Formhohlraum (52) einen lichten Durchmesser (53) aufweist, der dem Außendurchmesser (28) des ersten Induktionsheizelementes (12) entspricht, wobei das erste Induktionsheizelement (12) positioniert in der ersten Spritzgussformhälfte (50) aufgenommen wird;
- Einlegen eines zweiten Induktionsheizelementes (13) in eine mit der ersten Spritzgussformhälfte (50) zusammenwirkende zweite Spritzgussformhälfte (51), wobei die zweite Spritzgussformhälfte (51) einen zweiten Formhohlraum (54) zur Aufnahme des zweiten Induktionsheizelementes (13) aufweist, welcher zweite Formhohlraum (54) einen lichten Durchmesser (55) aufweist, der dem Außendurchmesser (30) des zweiten Induktionsheizelementes (13) entspricht, wobei das zweite Induktionsheizelement (13) positioniert in der zweiten Spritzgussformhälfte (51) aufgenommen wird;
- Aneinanderdrücken der ersten (50) und der zweiten Spritzgussformhälfte (51), wobei die erste (50) und/oder die zweite Spritzgussformhälfte (51) einen ersten Formkern (56) aufweist, welcher zentrisch bezüglich der Formhohlräume (52, 54) zur Aufnahme der Induktionsheizelemente (12, 13) angeordnet ist und zur Ausformung eines ersten (5) und eines zweiten (7) Aufnahmeabschnittes der Induktionsverbindungsmuffe (1) dient;
- Einspritzen eines thermoplastischen Kunststoffmaterials in den ersten (52) und den zweiten Formhohlraum (54), wobei ein Innenteil (10) eines Muffenkörpers (9) der Induktionsverbindungsmuffe (1) gebildet wird, welcher innenseitig den ersten (5) und den zweiten Aufnahmeabschnitt (7) aufweist und in welchem die Induktionsheizelemente (12, 13) zumindest bereichsweise eingebettet sind, wobei im Umfang der Induktionsheizelemente (12, 13) angeordnete Ausnehmungen (16) vom Kunststoffmaterial des Innenteils (10) durchragt werden;
- Öffnen der ersten (50) und der zweiten Spritzgussformhälfte (51);
- Auswerfen des Innenteils (10) des Muffenkörpers (9) mit den Induktionsheizelementen (12, 13) aus einer der Spritzgussformhälften (50, 51);
- Einlegen des Innenteils (10) des Muffenkörpers (9) mit den Induktionsheizelementen (12, 13) in eine dritte Spritzgussformhälfte (60), wobei die dritte Spritzgussformhälfte (60) einen dritten Formhohlraum (62) zur Aufnahme des Innenteils (10) des Muffenkörpers (9) aufweist in welchem dritten Formhohlraum (62) ein weiterer Formkern (64) zur Positionierung des Innenteils (10) angeordnet ist und wobei zwischen dem Außenumfang des Innenteils (10) und dem dritten Formhohlraum (62) ein radialer Spalt (66) zum Ausformen eines Außenteils (11) des Muffenkörpers (9) ausgebildet wird;
- Schließen des dritten Formhohlraums (62);
- Einspritzen eines thermoplastischen Kunststoffmaterials in den dritten Formhohlraum (62), wobei ein Außenteil (11) des Muffenkörpers (9) gebildet wird;
- Öffnen des dritten Formhohlraums (62);
- Auswerfen der fertigen Induktionsverbindungsmuffe (1).

10. Verfahren zur Herstellung einer Induktionsverbindungsmuffe (1) nach Anspruch 9, **dadurch gekennzeichnet, dass** zum Schließen des dritten Formhohlraums (62) eine vierte Spritzgussformhälfte (61) mit einem vierten Formhohlraum (63) bereitgestellt wird, welcher vierte Formhohlraum (63) mit dem dritten Formhohlraum (62) der dritten Spritzgussformhälfte (60) zusammenwirkt.

11. Verfahren zur Herstellung einer Induktionsverbindungsmuffe (1) nach Anspruch 10, **dadurch gekennzeichnet, dass** die erste (50) und die dritte Spritzgussformhälfte (60) an einer gemeinsamen Aufspannplatte angeordnet sind und dass die zweite (51) und die vierte Spritzgussformhälfte (61) an einer gemeinsamen Aufspannplatte angeordnet sind, wobei die erste (50) und die dritte Spritzgussformhälfte (60) eine Düsenseite bilden und die zweite (51) und die vierte Spritzgussformhälfte (61) eine Auswerferseite bilden und gleichzeitig miteinander bewegt werden.

12. Verfahren zur Herstellung einer Induktionsverbindungsmuffe (1) nach einem der Ansprüche 9 bis 11, **dadurch gekennzeichnet, dass** das Auswerfen des Innenteils (10) des Muffenkörpers (9) mit den daran angegossenen Induktionsheizelementen (12, 13) und/oder der fertigen Induktionsverbindungsmuffe (1) mittels Auswerfern (67) bewerkstelligt wird, welche in einer der Spritzgussformhälften (50, 51, 60, 61) angeordnet sind.

## Claims

1. An induction connection sleeve (1) for fusion joining plastic pipes (2, 3), comprising:
a sleeve body (9) from an injection-molded thermoplastic plastic material, having a first (5) and a second receiving section (7) for receiving first (4) and second connection sections (6) of the plastic pipes (2, 3) to be connected, which receiving sections (5, 7) are arranged coaxially to one another;
a first induction heating element (12) which is configured in a shell-like manner and has recesses (16) that are arranged in the circumference, which first induction heating element (12) is embedded in the sleeve body (9), wherein the first induction heating element (12) surrounds the first receiving section (5) of the sleeve body (9);
a second induction heating element (13) which is configured in a shell-like manner, and
has recesses (16) that are arranged in the circumference, which second induction heating element (13) is embedded in the sleeve body (9), wherein the second induction heating element (13) surrounds the second receptacle portion (7) of the sleeve body (9),
**characterized in that** the sleeve body (9) comprises an internal part (10), which internal part (10) forms the two receiving sections (5, 7), and on which the induction heating elements (12, 13) are received such that the recesses (16) of the induction heating elements (12) are penetrated by the internal part (10) and, on their external casing surfaces (14, 15), lie flush with the internal part (10) in the region of the induction heating elements (12, 13), and **in that** the sleeve body (9) comprises an external part (11) which is connected in a materially bonded manner to the internal part (10) and
surrounds the external casing surfaces (14, 15) of the induction heating elements (12, 13), wherein the induction heating elements (12, 13) are entirely enclosed by the internal part (10) and by the external part (11).

2. The induction connection sleeve according to claim 1, **characterized in that** the internal part (10) of the sleeve body (9) is formed by a first plastic from the group of thermoplastic materials, which has a first melting point, and **in that** the external part (11) of the sleeve body (9) is formed by a second plastic, different from the first plastic, from the group of thermoplastic materials, which has a second melting point, wherein the melting point of the second plastic is higher than the melting point of the first plastic.

3. The induction connection sleeve according to claim 1 or 2, **characterized in that** a bonding layer (38) is formed between the internal part (10) and the external part (11).

4. The induction connection sleeve according to one of the preceding claims, **characterized in that** a continuous receiving section (17) having a cylindrical internal casing surface (18) for receiving connection sections (4, 6) of the plastic pipes (2, 3) to be connected is formed on the internal part (10), wherein the first and the second receiving section (7) are formed in the continuous receiving section (17).

5. The induction connection sleeve according to one of the preceding claims, **characterized in that** an external casing surface (41) of the external part (11) is configured so as to emanate from the longitudinal center of the sleeve body (9) and taper in the direction toward an end face (44, 45) of the sleeve body (9).

6. The induction connection sleeve according to one of the preceding claims, **characterized in that** the wall thickness (32) of the induction heating element (12) is between 40 % and 60 % relative to the wall thickness (39) of the internal part (10) of the sleeve body.

7. The induction connection sleeve according to one of the preceding claims, **characterized in that** the width (47, 48) of the first (12) and the second induction heating element (13) is between 25 % and 35 % relative to a width (46) in the axial direction of the sleeve body (9).

8. The induction heating element according to one of the preceding claims, **characterized in that** at least one position-securing element (22) is arranged on the sleeve body (9), said position-securing element (22) being arranged, with respect to one of the receptacle portions (5, 7), so as to project radially in the direction toward the center of the sleeve body (9).

9. A method for producing an induction connection sleeve (1), in particular an induction connection sleeve (1) according to one of the preceding claims, **characterized in that** the production method comprises the following method steps:
- inserting a first induction heating element (12) in a first injection-mold half (50), wherein the first injection-mold half (50) has a first mold cavity (52) for receiving the first induction heating element (12), said first mold cavity (52) having a clear diameter (53) which corresponds to the external diameter (28) of the first induction heating element (12), wherein the first induction heating element (12) is received in a positioned manner in the first injection-mold half (50);
- inserting a second induction heating element (13) in a second injection-mold half (51) that cooperates with the first injection-mold half (50), wherein the second injection-mold half (51) has a second mold cavity (54) for receiving the second induction heating element (13), said second mold cavity (54) having a clear diameter (55) which corresponds to the external diameter (30) of the second induction heating element (13), wherein the second induction heating element (13) is received in a positioned manner in the second injection-mold half (51);
- pressing the first (50) and the second injection-mold half (51) together, wherein the first (50) and/or the second injection-mold half (51) has a first mold core (56), which is arranged so as to be centric with respect to the mold cavities (52, 54) for receiving the induction heating elements (12, 13) and serves for molding a first (5) and a second (7) receiving section of the induction connection sleeve (1);
- injecting a thermoplastic material into the first (52) and the second mold cavity (54), wherein an internal part (10) of a sleeve body (9) of the induction connection sleeve (1) is formed, which has, on the inside, the first (5) and the second receiving section (7), and in which internal part (10) the induction heating elements (12, 13) are embedded at least in some regions, wherein recesses (16) that are arranged in the circumference of the induction heating elements (12, 13) are penetrated by the plastic material of the internal part (10);
- opening the first (50) and the second injection-mold half (51);
- ejecting the internal part (10) of the sleeve body (9) having the induction heating elements (12, 13) from one of the injection-mold halves (50; 51);
- inserting the internal part (10) of the sleeve body (9) having the induction heating elements (12, 13) in a third injection-mold half (60), wherein the third injection-mold half (60) has a third mold cavity (62) for receiving the internal part (10) of the sleeve body (9), in which third mold cavity (62) a further mold core (64) is arranged for positioning the internal part (10), and wherein a radial gap (66) for molding an external part (11) of the sleeve body (9) is formed between the external circumference of the internal part (10) and the third mold cavity (62);
- closing the third mold cavity (62);
- injecting a thermoplastic material into the third mold cavity (62), wherein an external part (11) of the sleeve body (9) is formed;
- opening the third mold cavity (62);
- ejecting the finished induction connection sleeve (1).

10. The method for producing an induction connection sleeve (1) according to claim 9, **characterized in that** a fourth injection-mold half (61) having a fourth mold cavity (63) is provided for closing the third mold cavity (62), which fourth mold cavity (63) cooperates with the third mold cavity (62) of the third injection-mold half (60).

11. The method for producing an induction connection sleeve (1) according to claim 10, **characterized in that** the first (50) and the third injection-mold half (60) are arranged on a common clamping plate, and **in that** the second (51) and the fourth injection-mold half (61) are arranged on a common clamping plate, wherein the first (50) and the third injection-mold half (60) form a nozzle side, and the second (51) and the fourth injection-mold half (61) form an ejector side and are moved simultaneously.

12. The method for producing an induction connection sleeve (1) according to one of claims 9 to 11, **characterized in that** ejecting the internal part (10) of the sleeve body (9) having the induction heating elements (12, 13) molded thereon and/or ejecting the finished induction connection sleeve (1) is carried out by means of ejectors (67) which are arranged in one of the injection-mold halves (50, 51, 60, 61).

## Revendications

1. Manchon de raccordement par induction (1) pour l'assemblage par fusion de tubes en matière plastique (2, 3), comprenant :
un corps de manchon (9) constitué d'une matière plastique thermoplastique moulée par injection avec une première (5) et une deuxième portion de logement (7) pour le logement des premières (4) et de deuxièmes portions de raccordement (6) des tubes en matière plastique (2, 3) à relier, ces portions de logements (5, 7) étant disposées de manière coaxiale entre elles ;
un premier élément de chauffage par induction (12), qui présente la forme d'une douille et qui comprend des évidements (16) disposés sur sa circonférence et ce premier élément de chauffage par induction (12) est intégré dans le corps de manchon (9), dans lequel le premier élément de chauffage par induction (12) entoure la première portion de logement (5) du corps de manchon (9) ;
un deuxième élément de chauffage par induction (13), qui présente la forme d'une douille et qui comprend des évidements (16) disposés sur sa circonférence et ce deuxième élément de chauffage par induction (13) est intégré dans le corps de manchon (9), dans lequel le deuxième élément de chauffage par induction (13) entoure la deuxième portion de logement (7) du corps de manchon (9),
**caractérisé en ce que** le corps de manchon (9) comprend une partie interne (10), cette partie interne (10) formant les deux portions de logement (5, 7) et sur laquelle les éléments de chauffage par induction (12, 13) sont logés de façon à ce que les évidements (16) des éléments de chauffage par induction (12) soient traversés par la partie interne (10) et, au niveau des éléments de chauffage par induction (12, 13),
ceux-ci se terminent en affleurement avec la partie interne (10) sur leurs surfaces d'enveloppes externes (14, 15) et **en ce que** le corps de manchon (9) comprend une partie externe (11) qui est reliée par liaison de matière avec la partie interne (10) et qui entoure les surfaces d'enveloppes externes (14, 15) des éléments de chauffage par induction (12, 13), dans lequel les éléments de chauffage par induction (12, 13) sont entourés entièrement par la partie interne (10) et par la partie externe (11).

2. Manchon de raccordement par induction selon la revendication 1, **caractérisé en ce que** la partie interne (10) du corps de manchon (9) est constitué d'une première matière plastique parmi le groupe de matières plastiques thermoplastiques qui présentent un premier point de fusion et **en ce que** la partie externe (11) du corps de manchon (9) est constitué d'une deuxième matière plastique, différente de la première matière plastique, parmi le groupe de matières plastiques thermoplastiques qui présentent un deuxième point de fusion, dans lequel le point de fusion de la deuxième matière plastique est plus élevé que le point de fusion de la première matière plastique.

3. Manchon de raccordement par induction selon la revendication 1 ou 2, **caractérisé en ce que**, entre la partie interne (10) et la partie externe (11) est réalisée une couche d'amélioration de l'adhérence (38).

4. Manchon de raccordement par induction selon l'une des revendications précédentes, **caractérisé en ce que**, sur la partie interne (10) est réalisée une portion de logement continue (17) avec une surface d'enveloppe interne cylindrique (18) pour le logement de portions de raccordement (4, 6) des tubes en matière plastique (2, 3) raccorder, dans lequel les première et deuxième portions de logement (7) sont réalisées dans la portion de logement continue (17).

5. Manchon de raccordement par induction selon l'une des revendications précédentes, **caractérisé en ce qu'**une surface d'enveloppe externe (41) de la partie externe (11) est réalisée à partir du centre longitudinal du corps de manchon (9) en se rétrécissant vers une face frontale (44, 45) du corps de manchon (9).

6. Manchon de raccordement par induction selon l'une des revendications précédentes, **caractérisé en ce que** l'épaisseur de paroi (32) de l'élément de chauffage par induction (12) représente entre 40 % et 60 % de l'épaisseur de paroi (39) de la partie interne (10) du corps de manchon.

7. Manchon de raccordement par induction selon l'une des revendications précédentes, **caractérisé en ce que** la largeur (47, 48) des premier (12) et deuxième éléments de chauffage par induction (13) représente entre 25 % et 35 % d'une largeur (46) dans la direction axiale du corps de manchon (9).

8. Manchon de raccordement par induction selon l'une des revendications précédentes, **caractérisé en ce que**, sur le corps de manchon (9) est disposé au moins un élément de positionnement (22) qui est disposé en saillie radialement dans la direction du centre du corps de manchon (9) par rapport à une des portions de logement (5, 7).

9. Procédé de fabrication d'un manchon de raccordement par induction (1), plus particulièrement d'un manchon de raccordement par induction (1) selon l'une des revendications précédentes, **caractérisé en ce que** le procédé de fabrication comprend les étapes suivantes :
- insertion d'un premier élément de chauffage par induction (12) dans une première moitié de moule à injection (50), dans lequel la première moitié de moule à injection (50) comprend une première cavité de moule (52) pour le logement du premier élément de chauffage par induction (12), cette première cavité de moule (52) présentant un diamètre intérieur (53) qui correspond au diamètre extérieur (28) du premier élément de chauffage par induction (12), dans lequel le premier élément de chauffage par induction (12) est logé de manière positionnée dans la première moitié de moule à injection (50) ;
- insertion d'un deuxième élément de chauffage par induction (13) dans une deuxième moitié de moule à injection (51) interagissant avec la première moitié de moule à injection (50), dans lequel la deuxième moitié de moule à injection (51) comprend une deuxième cavité de moule (54) pour le logement du deuxième élément de chauffage par induction (13), cette deuxième cavité de moule (54) présentant un diamètre intérieur (55) qui correspond au diamètre extérieur (30) du deuxième élément de chauffage par induction (13), dans lequel le deuxième élément de chauffage par induction (13) est logé de manière positionnée dans la deuxième moitié de moule à injection (51) ;
- compression l'une contre l'autre des première (50) et deuxième moitiés de moule à injection (51), dans lequel la première (50) et/ou la deuxième moitié de moule à injection (51) présente un premier noyau de moule (56) qui est disposé de manière centrée par rapport aux espaces creux du moule (52, 54) pour le logement des éléments de chauffage par induction (12, 13) et permet la formation d'une première (5) et d'une deuxième portions de logements (7) du manchon de raccordement par induction (1) ;
- injection d'une matière plastique thermoplastique dans les premier (52) et deuxième (54) espaces creux du moule, dans lequel une partie interne (10) d'un corps de manchon (9) du manchon de raccordement par induction (1) est formée, qui comprend, à l'intérieur, la première (5) et la deuxième (7) portion de logement et dans lequel les éléments de chauffage par induction (12, 13) sont intégrés au moins à certains endroits, dans lequel, des évidements (16) disposés sur la circonférence des éléments de chauffage par induction (12, 13) sont traversés par la matière plastique de la partie interne (10) ;
- ouverture des première (50) et deuxième (51) moitiés de moule à injection ;
- éjection de la partie interne (10) du corps de manchon (9) avec les éléments de chauffage par induction (12, 13) hors d'une des moitiés de moule à injection (50, 51) ;
- insertion de la partie interne (10) du corps de manchon (9) avec les éléments de chauffage par induction (12, 13) dans une troisième moitié de moule à injection (60), dans lequel la troisième moitié de moule à injection (60) comprend une troisième cavité de moule (62) pour le logement de la partie interne (10) du corps de manchon (9), un autre noyau de moule (64) étant disposé dans cette troisième cavité de moule (62) pour le positionnement de la partie interne (10), et dans lequel, entre la circonférence externe de la partie interne (10) et la troisième cavité de moule (62), est réalisé un interstice radial (66) pour la formation d'une partie externe (11) du corps de manchon (9) :
- fermeture de la troisième cavité de moule (62) ;
- injection d'une matière plastique thermoplastique dans la troisième cavité de moule (62), dans lequel une partie externe (11) du corps de manchon (9) est formée ;
- ouverture de la troisième cavité de moule (62) ;
- éjection du manchon de raccordement par induction (1) terminé.

10. Procédé de fabrication d'un manchon de raccordement par induction (1) selon la revendication 9, **caractérisé en ce que**, pour la fermeture de la troisième cavité de moule (62), une quatrième moitié de moule à injection (61) avec une quatrième cavité de moule (63) est mise à disposition, cette quatrième cavité de moule (63) interagissant avec la troisième cavité de moule (62) de la troisième moitié de moule à injection (60).

11. Procédé de fabrication d'un manchon de raccordement par induction (1) selon la revendication 10, **caractérisé en ce que** les première (50) et troisième (60) moitiés de moule à injection sont disposées sur une plaque de serrage commune et **en ce que** les deuxième (51) et quatrième (61) moitiés de moule à injection sont disposées sur une plaque de serrage commune, dans lequel les première (50) et troisième (60) moitiés de moule à injection forment un côté de buse et les deuxième (51) et quatrième (61) moitiés de moule à injection forment un côté d'éjecteur et sont déplacés simultanément l'une avec l'autre.

12. Procédé de fabrication d'un manchon de raccordement par induction (1) selon l'une des revendications 9 à 11, **caractérisé en ce que** l'éjection de la partie interne (10) du corps de manchon (9) avec les éléments de chauffage par induction (12, 13) moulés sur celle-ci et/ou du manchon de raccordement par induction (1) terminé est provoquée par des éjecteurs (67) qui sont disposés dans une des moitiés de moule à injection (50, 51, 60,61).
